# EUROPEAN PATENT APPLICATION

(11) **EP 4 822 324 A1**
(43) Date of publication of application: **14.10.2026**
(21) Application number: 24927159.4
(22) Date of filing: 24.09.2024
(51) Int. Cl.: G01M 11/00, G01M 11/02, G02B 6/12, H01S 3/00

(54) **INSPECTION DEVICE AND INSPECTION METHOD**

(30) Priority: 28.02.2024 JP 2024028932
(71) Applicant: Hamamatsu Photonics K.K., Hamamatsu-shi, Shizuoka 435-8558 (JP); Vrije Universiteit Brussel, 1050 Brussel (BE)
(72) Inventor: WATANABE, Koyo, Hamamatsu-shi, Shizuoka 435-8558 (JP); VERMEULEN, Nathalie, 1050 Brussel (BE)
(74) Representative: Grünecker Patent- und Rechtsanwälte PartG mbB
(86) International application number: PCT/JP2024/033934
(87) International publication number: WO 2025/182120

(57) **Abstract**

An inspection device 1 includes: a pulse forming unit 3 that generates a pulse train Pb in which a plurality of optical pulses Pb1 and Pb2 having different center wavelengths are arranged at predetermined time intervals; a correlation optical system 7 that has polarization dependence in a predetermined polarization direction and generates correlation light Pc of the pulse train Pb output from a photonic integrated circuit 5; an optical detection unit 8 that detects a time waveform of the correlation light Pc; an evaluation unit 9 that evaluates a waveguide of the photonic integrated circuit 5 based on the feature quantity of the time waveform; and a first adjustment unit 4 that makes the polarization direction of each of the optical pulses Pb1 and Pb2 of the pulse train Pb input to the photonic integrated circuit 5 perpendicular to the in-plane direction of a substrate 50.

## Description

### Technical Field

The present disclosure relates to an inspection device and an inspection method.

### Background Art

The dispersion measurement device described in Patent Literature 1 includes: a pulse forming unit that forms, from a first optical pulse output from a measurement target, a pulse train including a plurality of second optical pulses having a time difference therebetween and having different center wavelengths; a correlation optical system that receives the pulse train output from the pulse forming unit and outputs correlation light including the auto-correlation of the pulse train; an optical detection unit that detects a time waveform of the correlation light; and a calculation unit that estimates the amount of chromatic dispersion of the measurement target based on the feature quantities of the time waveform.

Dispersion measurement devices such as the one described above are expected to be used as inspection devices for photonic integrated circuits (PICs). The photonic integrated circuit is a device that integrates various optical functions, and transmits information signals using light. For example, when a pulse train is input to a photonic integrated circuit, chromatic dispersion may occur while the pulse train propagates through the waveguide of the photonic integrated circuit. Therefore, the chromatic dispersion in the photonic integrated circuit is estimated using a dispersion measurement device, and it is inspected whether or not the chromatic dispersion deviates from the design value. If the deviation is large, the characteristics of the waveguide of the photonic integrated circuit are adjusted.

### Citation List

### Patent Literature

Patent Literature 1: Japanese Unexamined Patent Publication No. 2020-169946

### Summary of Invention

### Technical Problem

When the amount of chromatic dispersion is repeatedly measured in the dispersion measurement device, measurement errors may occur. Since the waveguide length of the photonic integrated circuit is relatively short, large measurement errors may affect the accuracy of inspection of the photonic integrated circuit.

The present disclosure provides an inspection device and an inspection method capable of performing accurate inspection of a photonic integrated circuit by reducing measurement errors of the amount of chromatic dispersion.

### Solution to Problem

The present disclosure is summarized as follows.

[1] An inspection device for inspecting a photonic integrated circuit in which a waveguide is provided on a substrate, the device comprising: a pulse forming unit that generates a pulse train in which a plurality of optical pulses having different center wavelengths are arranged at predetermined time intervals; a correlation optical system that has polarization dependence in a predetermined polarization direction and generates correlation light including cross-correlation light or auto-correlation light of the pulse train output from the photonic integrated circuit through the waveguide; an optical detection unit that detects a time waveform of the correlation light; an evaluation unit that evaluates the waveguide of the photonic integrated circuit based on a feature quantity of the time waveform; and a first adjustment unit that makes a polarization direction of each optical pulse of the pulse train input to the photonic integrated circuit perpendicular to an in-plane direction of the substrate.

In this inspection device, the pulse train is input to the photonic integrated circuit by the first adjustment unit such that the polarization direction of each of the plurality of optical pulses is perpendicular to the in-plane direction of the substrate. This makes polarization mixing less likely to occur in the pulse train output from the photonic integrated circuit. As a result, the generation efficiency of the correlation light in the correlation optical system is increased, and at the same time, noise components that distort the correlation waveform are reduced, thereby improving the detection accuracy of the time waveform and reducing measurement errors of the amount of chromatic dispersion. In this manner, since polarization mixing of the pulse train output from the photonic integrated circuit is suppressed to reduce measurement errors of the amount of chromatic dispersion, it is possible to perform accurate inspection of the photonic integrated circuit.

[2] The inspection device according to [1], further comprising: a first polarization-maintaining fiber that optically connects the pulse-forming unit to the photonic integrated circuit, wherein the first adjustment unit is a rotation mechanism that rotates the first polarization-maintaining fiber around its axis. In this case, the polarization direction of each optical pulse of the pulse train input to the photonic integrated circuit can be easily adjusted by rotating the first polarization-maintaining fiber around the axis of the first polarization-maintaining fiber.

[3] The inspection device according to [1], further including: a first polarization-maintaining fiber that optically connects the pulse-forming unit to the photonic integrated circuit, wherein the first adjustment unit is a rotation mechanism that rotates the in-plane direction of the substrate around an axis of the first polarization-maintaining fiber. In this case, the polarization direction of each optical pulse of the pulse train input to the photonic integrated circuit can be easily adjusted by rotating the in-plane direction of the substrate of the photonic integrated circuit around the axis of the first polarization-maintaining fiber.

[4] The inspection device according to any one of [1] to [3], further including: a second adjustment unit that matches a polarization direction of each optical pulse of the pulse train input to the correlation optical system with the polarization direction of the correlation optical system. In this case, the pulse train is input to the correlation optical system by the second adjustment unit such that the polarization direction of the pulse train matches a polarization direction in which the correlation optical system has polarization dependence. Therefore, the correlation light can be efficiently generated in the correlation optical system. By increasing the generation efficiency of the correlation light in the correlation optical system and simultaneously reducing noise components that distort the correlation waveform, measurement errors of the amount of chromatic dispersion are further reduced, enabling even more accurate inspection of the photonic integrated circuit.

[5] The inspection device according to [4], further including: a second polarization-maintaining fiber that optically connects the photonic integrated circuit to the correlation optical system, wherein the second adjustment unit is a rotation mechanism that rotates the second polarization-maintaining fiber around an axis of the second polarization-maintaining fiber. In this case, the polarization direction of each optical pulse of the pulse train input to the second polarization-maintaining fiber can be easily adjusted by rotating the in-plane direction of the substrate of the photonic integrated circuit around the axis of the second polarization-maintaining fiber.

[6] The inspection device according to any one of [1] to [5], wherein the pulse forming unit includes a spatial light modulator that sets at least one of a wavelength difference, a time difference, and a wavelength width of the plurality of optical pulses to an arbitrary magnitude. In this case, for example, by increasing the wavelength difference between the optical pulses in the pulse train, the pulse interval (time difference) between the optical pulses can be increased. As the pulse interval between the optical pulses increases, the repetitive measurement error of the amount of chromatic dispersion is relatively reduced, enabling more accurate inspection of the photonic integrated circuit. In addition, for example, by increasing the wavelength width of each of the plurality of optical pulses using the pulse forming unit, the pulse width of each optical pulse is reduced, so that the repetitive measurement error of the amount of chromatic dispersion can be relatively reduced. As a result, it is possible to perform more accurate inspection of the photonic integrated circuit.

[7] An inspection device for inspecting a photonic integrated circuit in which a waveguide is provided on a substrate, the device including: a pulse forming unit that generates a pulse train in which a plurality of optical pulses having different center wavelengths are arranged at predetermined time intervals; an optical detection unit that detects a time waveform of the pulse train generated by the pulse forming unit and output from the photonic integrated circuit through the waveguide; an evaluation unit that evaluates the waveguide of the photonic integrated circuit based on a feature quantity of the time waveform; and a first adjustment unit that makes a polarization direction of each optical pulse of the pulse train input to the photonic integrated circuit perpendicular to an in-plane direction of the substrate.

In this inspection device, the pulse train is input to the photonic integrated circuit by the first adjustment unit such that the polarization direction of each of the plurality of optical pulses is perpendicular to the in-plane direction of the substrate. This makes polarization mixing less likely to occur in the pulse train output from the photonic integrated circuit. As a result, the detection accuracy of the time waveform is improved, and measurement errors of the chromatic dispersion are reduced. In this manner, since polarization mixing of the pulse train output from the photonic integrated circuit is suppressed to reduce measurement errors of the amount of chromatic dispersion, it is possible to perform accurate inspection of the photonic integrated circuit.

[8] An inspection method for inspecting a photonic integrated circuit in which a waveguide is provided on a substrate, the method including: a pulse forming step for generating a pulse train in which a plurality of optical pulses having different center wavelengths are arranged at predetermined time intervals; a correlation light generation step for generating correlation light including cross-correlation light or auto-correlation light of the pulse train output from the photonic integrated circuit by using a correlation optical system having polarization dependence in a predetermined polarization direction; an optical detection step for detecting a time waveform of the correlation light; an evaluation step for evaluating the waveguide of the photonic integrated circuit based on a feature quantity of the time waveform; and a first adjustment step of making a polarization direction of each optical pulse of the pulse train input to the photonic integrated circuit perpendicular to an in-plane direction of the substrate.

In this inspection method, in the first adjustment step, the pulse train is input to the photonic integrated circuit such that the polarization direction of each of the plurality of optical pulses is perpendicular to the in-plane direction of the substrate. This makes polarization mixing less likely to occur in the pulse train output from the photonic integrated circuit. As a result, the generation efficiency of the correlation light in the correlation optical system is increased, and at the same time, noise components that distort the correlation waveform are reduced, thereby improving the detection accuracy of the time waveform and reducing measurement errors of the chromatic dispersion. In this manner, since polarization mixing of the pulse train output from the photonic integrated circuit is suppressed to reduce measurement errors of the amount of chromatic dispersion, it is possible to perform accurate inspection of the photonic integrated circuit.

[9] The inspection method according to [8], further including: a second adjustment step for matching a polarization direction of each optical pulse of the pulse train input to the correlation optical system with the polarization direction of the correlation optical system. In this case, in the second adjustment step, the pulse train is input to the correlation optical system such that the polarization direction of the pulse train matches the polarization direction in which the correlation optical system has polarization dependence. Therefore, correlation light can be efficiently generated in the correlation optical system. By increasing the generation efficiency of the correlation light in the correlation optical system and at the same time reducing noise components that distort the correlation waveform, measurement errors of the amount of chromatic dispersion are further reduced, enabling even more accurate inspection of the photonic integrated circuit.

[10] The inspection method according to [8] or [9], wherein, in the determination step, an amount of chromatic dispersion of the photonic integrated circuit is calculated based on a feature quantity of the time waveform of the correlation light detected through the photonic integrated circuit and a feature quantity of the time waveform of the correlation light detected without passing through the photonic integrated circuit. In this case, by calculating the relative amount of dispersion with respect to the feature quantity of the time waveform of the correlation light detected through the photonic integrated circuit using, as a reference point, the feature quantity of the time waveform of the correlation light detected without passing through the photonic integrated circuit, it is possible to improve the measurement robustness (stability against external factors such as environmental changes and laser instability) of the system.

[11] The inspection method according to [8] or [9], wherein, in the determination step, an amount of chromatic dispersion of the photonic integrated circuit is calculated based on a feature quantity of a time waveform of correlation light theoretically calculated in advance assuming that chromatic dispersion is zero and a feature quantity of the time waveform of the correlation light detected in the optical detection step. In this case, the amount of chromatic dispersion can be efficiently calculated using the feature quantity calculated in advance.

### Advantageous Effects of Invention

According to the present disclosure, it is possible to perform accurate inspection of a photonic integrated circuit by reducing measurement errors of the amount of chromatic dispersion.

### Brief Description of Drawings

[FIG. 1] FIG. 1 is a drawing schematically showing the configuration of an inspection device according to one embodiment of the present invention.
[FIG. 2] FIG. 2 is a drawing showing an example of the configuration of a pulse forming unit.
[FIG. 3] FIG. 3 is a drawing showing an example of a modulation surface of a spatial light modulator.
[FIG. 4] FIG. 4 is a schematic drawing schematically showing a photonic integrated circuit.
[FIG. 5] FIG. 5 is a drawing schematically showing an example of the configuration of a correlation optical system.
[FIG. 6] FIG. 6 is a drawing schematically showing another example of the configuration of the correlation optical system.
[FIG. 7] FIG. 7(a) is a drawing showing an example of a time waveform of correlation light when no chromatic dispersion occurs in a pulse train, and FIG. 7(b) is a drawing showing an example of a time waveform of correlation light when chromatic dispersion occurs in a pulse train.
[FIG. 8] FIG. 8 is a graph showing an example of a time waveform of correlation light.
[FIG. 9] FIGS. 9(a), 9(b), 9(c), and 9(d) are drawings showing examples of a delay time of a pulse train.
[FIG. 10] FIG. 10 is a diagram schematically showing an example of the hardware configuration of an evaluation unit.
[FIG. 11] FIG. 11 is a flowchart showing an inspection method using an inspection device.
[FIG. 12] FIG. 12 is a drawing showing the relationship between the waveguide length of a waveguide of a photonic integrated circuit and a pulse interval when an inspection device according to a comparative example is used.
[FIG. 13] FIG. 13 is a drawing showing the relationship between the waveguide length of a waveguide of a photonic integrated circuit and a pulse interval when the inspection device according to one embodiment of the present invention is used.
[FIG. 14] FIG. 14(a) is a drawing schematically showing an inspection device according to a second modification example, FIG. 14(b) is a drawing schematically showing an inspection device according to a third modification example, and FIG. 14(c) is a drawing schematically showing an inspection device according to a fourth modification example.
[FIG. 15] FIG. 15(a) is a drawing schematically showing an inspection device according to a fifth modification example, and FIG. 15(b) is a drawing schematically showing an inspection device according to a sixth modification example.
[FIG. 16] FIG. 16 is a drawing showing an example in which a filter pattern is applied to each of a plurality of optical pulses.
[FIG. 17] FIG. 17(a) is a graph showing changes in average output when a spatial light modulator changes optical pulses and the wavelength width of each of the optical pulses, and FIG. 17(b) is a graph showing changes in pulse width when the spatial light modulator changes the wavelength width of each of a plurality of optical pulses.
[FIG. 18] FIG. 18(a) is a graph showing the relationship between the waveguide length of a wave guide of a photonic integrated circuit and a pulse interval when the pulse width is 4 nm, and FIG. 18(b) is a graph showing the relationship between the waveguide length of a waveguide of a photonic integrated circuit and a pulse interval when the pulse width is 6 nm.
[FIG. 19] FIG. 19 is a graph showing the relationship between the waveguide length of a waveguide of a photonic integrated circuit and a pulse interval when the pulse width is 8 nm.
[FIG. 20] FIG. 20(a) is a drawing for explaining the relationship between a wavelength difference and chromatic dispersion before increasing the wavelength difference, and FIG. 20(b) is a drawing for explaining the relationship between a wavelength difference and chromatic dispersion after increasing the wavelength difference.

### Description of Embodiments

Hereinafter, preferred embodiments of an inspection device according to one aspect of the present disclosure will be described in detail with reference to the drawings.

### [Configuration of an inspection device]

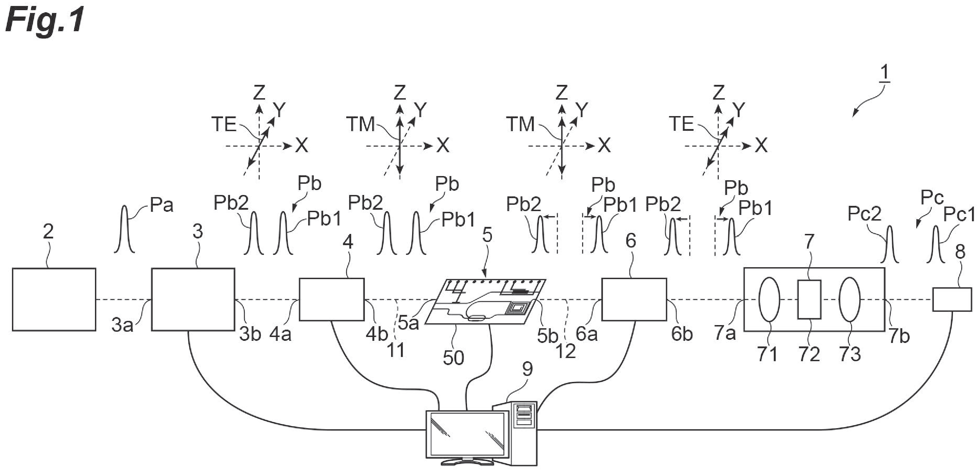

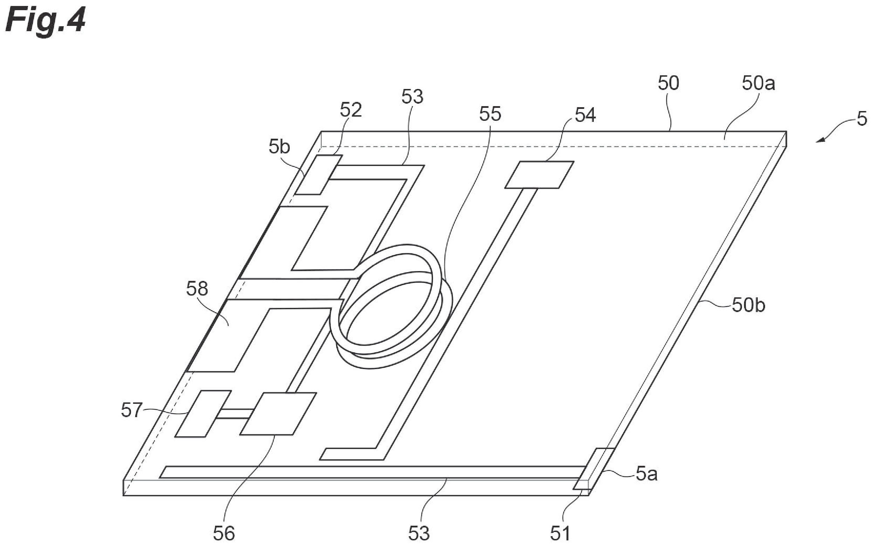

FIG. 1 is a drawing schematically showing the configuration of an inspection device according to one embodiment of the present invention. This inspection device 1 is a device for inspecting a photonic integrated circuit 5. The photonic integrated circuit 5 includes a waveguide 53 (see FIG. 4) provided on a substrate 50. In the present embodiment, the inspection device 1 is a device for measuring the chromatic dispersion of light to be measured that has propagated through the waveguide 53 of the photonic integrated circuit 5. The inspection device 1 includes a pulsed laser light source 2, a pulse forming unit 3, a first adjustment unit 4, a second adjustment unit 6, a correlation optical system 7, an optical detection unit 8, and an evaluation unit 9.

An optical input end 3a of the pulse forming unit 3 is optically coupled to the pulsed laser light source 2 either spatially or through an optical waveguide such as an optical fiber. An optical input end 4a of the first adjustment unit 4 is optically coupled to an optical output end 3b of the pulse forming unit 3 either spatially or through an optical waveguide such as an optical fiber. An optical input end 5a of the photonic integrated circuit 5 to be inspected is optically coupled to an optical output end 4b of the first adjustment unit 4 either spatially or through an optical waveguide such as an optical fiber. An optical input end 6a of the second adjustment unit 6 is optically coupled to an optical output end 5b of the photonic integrated circuit 5 either spatially or through an optical waveguide such as an optical fiber.

An optical input end 7a of the correlation optical system 7 is optically coupled to an optical output end 6b of the second adjustment unit 6 either spatially or through an optical waveguide such as an optical fiber. The optical detection unit 8 is optically coupled to an optical output end 7b of the correlation optical system 7 either spatially or through an optical waveguide such as an optical fiber. The evaluation unit 9 is electrically connected to each of the pulse forming unit 3, the photonic integrated circuit 5, and the optical detection unit 8. In addition, the evaluation unit 9 may be electrically connected to each of the first adjustment unit 4 and the second adjustment unit 6.

The pulsed laser light source 2 outputs a coherent optical pulse to be measured Pa. The pulsed laser light source 2 is, for example, a femtosecond laser, and in one embodiment, a solid-state laser light source such as an LD direct-pumped Yb:YAG pulsed laser. The time waveform of the optical pulse to be measured Pa is, for example, Gaussian in shape. The optical pulse to be measured Pa is an optical pulse having a certain bandwidth, and includes a plurality of continuous wavelength components. In addition, the pulsed laser light source 2 may be a light source that outputs an attosecond laser or a picosecond laser, or may be a titanium-sapphire laser light source, a semiconductor laser light source, or an F2 laser light source.

The pulse forming unit 3 forms a pulse train Pb including a plurality of optical pulses from the optical pulse to be measured Pa. The pulse train Pb is a group of single pulses generated by dividing the spectrum forming the optical pulse to be measured Pa into a plurality of wavelength bands and using each of the wavelength bands. In addition, at the boundaries of the plurality of wavelength bands, there may be portions overlapping each other. In the following example, the pulse train Pb includes two single pulses, which are optical pulses Pb1 and Pb2. The center wavelength and the wavelength band of the optical pulse Pb1 are different from the center wavelength and the wavelength band of the optical pulse Pb2.

In the pulse train Pb, a plurality of optical pulses Pb1 and Pb2 having different center wavelengths are arranged at predetermined time intervals. The peaks of the two optical pulses Pb1 and Pb2 are temporally separated from each other, and the propagation timings of the two optical pulses Pb1 and Pb2 are shifted from each other. In other words, the other optical pulse Pb2 has a time delay with respect to one optical pulse Pb1. However, tail portions of the adjacent optical pulses Pb1 and Pb2 may overlap each other.

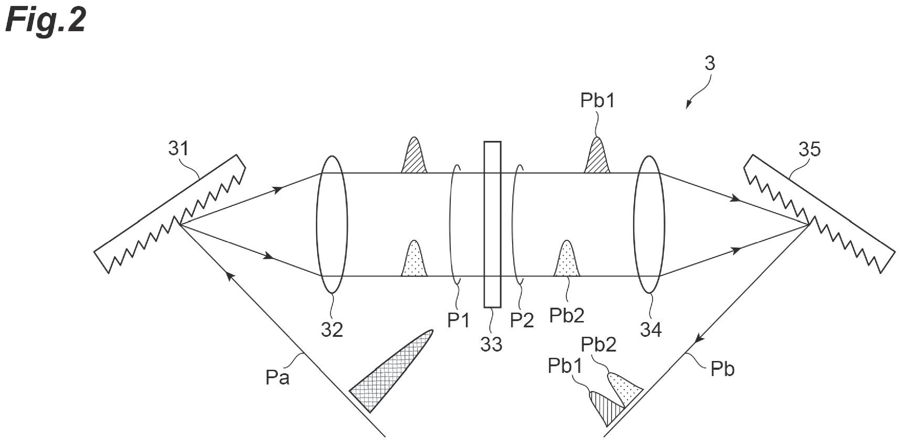

FIG. 2 is a drawing showing an example of the configuration of the pulse forming unit 3. This pulse forming unit 3 includes a diffraction grating 31, a lens 32, a spatial light modulator (SLM) 33, a lens 34, and a diffraction grating 35. The diffraction grating 31 is an example of a spectroscopic element. The diffraction grating 31 is optically coupled to the pulsed laser light source 2. The spatial light modulator 33 is optically coupled to the diffraction grating 31 through the lens 32. The diffraction grating 31 spatially separates, for each wavelength, a plurality of wavelength components included in the optical pulse to be measured Pa. In addition, as the spectroscopic element, other optical components such as a prism may be used instead of the diffraction grating 31. The optical pulse to be measured Pa is incident obliquely on the diffraction grating 31 and is spectrally separated into a plurality of wavelength components. Light P1 including the plurality of wavelength components is condensed for each wavelength component by the lens 32 and is imaged on the modulation surface of the spatial light modulator 33. The lens 32 may be a convex lens formed of a light-transmitting member, or may be a concave mirror having a concave light-reflecting surface.

The spatial light modulator 33 converts the light P1 into modulated light P2. The spatial light modulator 33 may be a reflective spatial light modulator or a transmissive spatial light modulator. In addition, the spatial light modulator 33 may be a liquid crystal type spatial light modulator or a digital mirror device. The modulated light P2 includes the optical pulses Pb1 and Pb2. The spatial light modulator 33 selects two arbitrary wavelength components, as the optical pulses Pb1 and Pb2, from the light P1 including a plurality of wavelength components. For example, the spatial light modulator 33 may perform intensity modulation so that the wavelength components of the optical pulses Pb1 and Pb2 become sufficiently large so as not to be affected by other wavelength components. Depending on the values of the selected wavelength components, a wavelength difference, which is a difference between the wavelength of the optical pulse Pb1 and the wavelength of the optical pulse Pb2, changes. As a result, the spatial light modulator 33 sets the wavelength difference between the two optical pulses Pb1 and Pb2 to an arbitrary magnitude. The wavelength difference that can be set is, for example, 1 nm to 50 nm.

The spatial light modulator 33 shifts the phases of the two optical pulses Pb1 and Pb2 relative to each other. To achieve this, the spatial light modulator 33 performs phase modulation on the light P1. As a result, the optical pulse Pb2 has a time delay with respect to the optical pulse Pb1. That is, the spatial light modulator 33 sets the time difference between the two optical pulses Pb1 and Pb2 to an arbitrary magnitude. The spatial light modulator 33 generates the modulated light P2 by performing intensity modulation and phase modulation on the light P1.

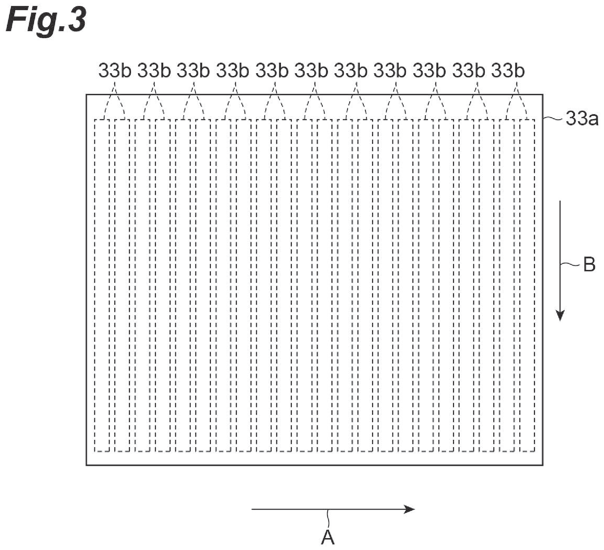

The modulation of the light P1 by the spatial light modulator 33 will be described in more detail. FIG. 3 is a drawing showing a modulation surface 33a of the spatial light modulator 33. As shown in FIG. 3, on the modulation surface 33a, a plurality of modulation regions 33b are arranged along a certain direction A, and each modulation region 33b extends in a direction B crossing the direction A. The direction A is a spectral direction by the diffraction grating 31. The modulation surface 33a functions as a Fourier transform plane, and each of the corresponding wavelength components after spectral decomposition is incident on each of the plurality of modulation regions 33b.

The spatial light modulator 33 modulates the intensity and phase of each incident wavelength component independently of other wavelength components in each modulation region 33b. Each modulation region 33b includes, for example, an intensity modulation pattern and a phase modulation pattern. The intensity modulation pattern and the phase modulation pattern differ, for example, for each modulation region 33b. The intensity modulation pattern and the phase modulation pattern in each modulation region 33b change along the direction A and are constant in the direction B, for example. The modulation amount of the intensity pattern in the modulation regions 33b on which the wavelength components of the optical pulses Pb1 and Pb2 are incident may be larger than the modulation amount of the intensity pattern in the modulation regions 33b on which other wavelength components are incident. The modulation amount of the phase pattern in the modulation regions 33b on which the wavelength component of the optical pulse Pb1 is incident may be larger than the modulation amount of the phase pattern in the modulation regions 33b on which the wavelength component of the optical pulse Pb2 is incident.

The optical pulses Pb1 and Pb2 included in the modulated light P2 modulated by the spatial light modulator 33 are collected at one point on the diffraction grating 35 by the lens 34. At this time, the lens 34 functions as a condensing optical system that condenses the modulated light P2. The lens 34 may be a convex lens formed of a light-transmitting member, or may be a concave mirror having a concave light-reflecting surface. In addition, the diffraction grating 35 functions as a multiplexing optical system, and multiplexes the optical pulses Pb1 and Pb2. That is, by the lens 34 and diffraction grating 35, the optical pulses Pb1 and Pb2 of the modulated light P2 are condensed and multiplexed to become a band-controlled multi-pulse (pulse train Pb).

Referring again to FIG. 1. The first adjustment unit 4 adjusts the polarization direction of the pulse train Pb output from the pulse forming unit 3. The first adjustment unit 4 causes the polarization directions of the optical pulses Pb1 and Pb2 of the pulse train Pb input to the photonic integrated circuit 5 to be perpendicular to an in-plane direction of the substrate 50. In the example shown in FIG. 1, for the sake of explanation, the traveling direction of the pulse train Pb is defined as an X-axis direction. The in-plane direction of the substrate 50 is defined by a Y-axis direction, which is perpendicular to the X-axis direction, and the X-axis direction. The thickness direction of the substrate 50 is defined by a Z-axis direction, which is perpendicular to the X-axis and the Y-axis directions.

The in-plane direction of the substrate 50 matches a polarization direction in a TE (Transverse Electric) mode (transverse polarization mode). In the TE mode, the direction of a main component of an electric field forming the optical pulses Pb1 and Pb2 of the pulse train Pb is along the Y-axis direction and matches the in-plane direction of the substrate 50.

A direction perpendicular to the in-plane direction of the substrate 50 matches a polarization direction in a TM (Transverse Magnetic) mode (longitudinal polarization mode). In the TM mode, the direction of a main component of an electric field forming the optical pulses Pb1 and Pb2 is along the Z-axis direction and is perpendicular to the in-plane direction of the substrate 50.

In one example, the inspection device 1 further includes a first polarization-maintaining fiber 11 that optically connects the optical output end 3b of the pulse forming unit 3 and the optical input end 5a of the photonic integrated circuit 5. The first polarization-maintaining fiber 11 is, for example, a fiber that maintains the polarization direction of the pulse train Pb. The polarization direction of the pulse train Pb propagating through the first polarization-maintaining fiber 11 is maintained in a constant direction.

The first adjustment unit 4 is a rotation mechanism that rotates the first polarization-maintaining fiber 11 around its axis. The axis of the first polarization-maintaining fiber 11 matches a propagation direction (X-axis direction) of the pulse train Pb. The first adjustment unit 4 is, for example, a fiber rotator. The first adjustment unit 4 receives, from the evaluation unit 9, an instruction regarding an angle for rotating the first polarization-maintaining fiber 11, for example. Based on this instruction, the first adjustment unit 4 may rotate the first polarization-maintaining fiber 11 around the axis of the first polarization-maintaining fiber 11. For example, the first adjustment unit 4 rotates the first polarization-maintaining fiber 11 around its axis by 90°. In this case, the polarization directions of the optical pulses Pb1 and Pb2 are rotated by 90°.

In the example shown in FIG. 1, the polarization mode of the optical pulses Pb1 and Pb2 is a TE mode at the time of being output from the pulse forming unit 3. That is, the polarization directions of the optical pulses Pb1 and Pb2 match the in-plane direction of the substrate 50. The first adjustment unit 4 converts the polarization mode of the optical pulses Pb1 and Pb2 into the TM mode. As a result, the polarization directions of the optical pulses Pb1 and Pb2 input to the photonic integrated circuit 5 are perpendicular to the in-plane direction of the substrate 50.

FIG. 4 is a schematic drawing schematically showing the photonic integrated circuit 5. The photonic integrated circuit 5 is a device that integrates various optical functions, and transmits information signals using light. The photonic integrated circuit 5 includes the substrate 50. As shown in FIG. 4, the photonic integrated circuit 5 includes various elements, and these elements are mounted on the substrate 50. In the example shown in FIG. 4, the photonic integrated circuit 5 includes an optical input section 51, an optical output section 52, a waveguide 53, photodiodes 54 and 57, an optical ring resonance circuit 55, a photonic crystal 56, a microheater 58, and the like.

The substrate 50 has a first surface 50a and a second surface 50b on a side opposite to the first surface 50a. In the example shown in FIG. 4, the optical input section 51, the optical output section 52, the waveguide 53, the photodiodes 54 and 57, the optical ring resonance circuit 55, and the photonic crystal 56 are mounted on the second surface 50b. The microheater 58 is mounted on the first surface 50a.

The optical input section 51 is a part through which light is input from the first adjustment unit 4 to the inside of the photonic integrated circuit 5 through the first polarization-maintaining fiber 11. The optical input section 51 is formed at the optical input end 5a, which is one side surface of the photonic integrated circuit 5. Although only one optical input section 51 is shown in FIG. 4, a plurality of optical input sections 51 are formed at the optical input end 5a. For example, in a state put into practical use after inspection, an optical cable is connected to the optical input section 51.

The optical output section 52 is a part through which the pulse train Pb is output from the photonic integrated circuit 5 toward the second adjustment unit 6. The optical output section 52 is formed at the optical output end 5b, which is the other end surface of the photonic integrated circuit 5. Although a single optical output section 52 is shown in FIG. 4, a plurality of optical output sections 52 may be formed at the optical output end 5b. For example, in a state put into practical use after inspection, an optical cable may be connected to each of the plurality of optical output sections 52. The optical output section 52 may output light guided by the waveguide 53 to the outside of the photonic integrated circuit 5.

The photodiodes 54 and 57 are photodetectors provided inside the photonic integrated circuit 5. The optical ring resonance circuit 55 is a circuit for setting a resonance wavelength. The photonic crystal 56 is a structure in which a refractive index changes periodically, and is a structure that confines light in a small region to manipulate the light. In addition, the photonic integrated circuit 5 may include not only the above-described components (elements) but also various other elements.

The microheater 58 may be formed on each element such as the waveguide 53, the optical ring resonance circuit 55, or an optical modulator. In the example shown in FIG. 4, the microheater 58 is formed so as to straddle a part of the waveguide 53 and overlap the optical ring resonance circuit 55.

The microheater 58 receives, for example, an instruction regarding a set temperature from the evaluation unit 9. Then, the microheater 58 may increase the temperature until the temperature of the microheater 58 reaches the set temperature and heat a part of the waveguide 53 at the set temperature. The microheater 58 can adjust the amount of chromatic dispersion in the waveguide by changing the refractive index of a part of the waveguide 53 through a thermo-optic effect. For example, since the change in the amount of chromatic dispersion appears as a change in the time difference between the optical pulse Pb1 and the optical pulse Pb2 guided through the waveguide 53, the microheater 58 may be adjusted using this as an indicator.

In the example shown in FIG. 4, the waveguide 53 is provided in a straight line from the optical input section 51 to the optical output section 52, but the waveguide 53 may also be formed in a curved shape or in a spiral shape, for example. When the waveguide 53 is curved or spiral, the direction of curvature of the waveguide 53 matches the in-plane direction of the substrate 50. The direction of curvature of the waveguide 53 refers to, for example, a direction in which the waveguide 53 is curved, that is, a direction traced by the curve of the waveguide 53.

In the pulse train Pb input to the photonic integrated circuit 5, chromatic dispersion occurs while the optical pulse Pb1 propagates through the waveguide 53. Since the optical pulses Pb1 and Pb2 have different wavelengths, their propagation speeds in the waveguide 53 are different. As a result, a difference arises between the propagation time of the optical pulse Pb1 and the propagation time of the optical pulse Pb2, causing the time interval between the optical pulse Pb1 and the optical pulse Pb2 to fluctuate.

In the present embodiment, the photonic integrated circuit 5 is optically designed so that the input optical pulses are output while maintaining their polarization mode. In this case, the optical pulses Pb1 and Pb2 input to the photonic integrated circuit 5 in the TM mode are output while maintaining the TM mode as the pulse train Pb propagates through the waveguide 53.

Depending on the polarization directions of the optical pulses Pb1 and Pb2 when input to the photonic integrated circuit 5, the likelihood of polarization mixing occurring in the optical pulses Pb1 and Pb2 output from the photonic integrated circuit 5 differs. Polarization mixing is a phenomenon in which the polarization modes of the optical pulses Pb1 and Pb2 include both TE mode and TM mode. In this case, when the ratio between the TE-mode component and the TM-mode component is expressed as a percentage, the closer the ratio between the two is to 50%, the greater the influence of polarization mixing becomes. If the influence of polarization mixing is large, measurement errors of the amount of chromatic dispersion may occur in the evaluation unit described later, and accordingly, there is a possibility that the photonic integrated circuit 5 cannot be inspected with high accuracy.

The magnitude of the influence of polarization mixing changes depending on the polarization directions of the optical pulses Pb1 and Pb2 input to the photonic integrated circuit 5. When the polarization directions of the optical pulses Pb1 and Pb2 input to the photonic integrated circuit 5 are perpendicular to the in-plane direction of the substrate 50 (when input in the TM mode), the ratio of the TE mode mixed into the TM mode in the optical pulses Pb1 and Pb2 output from the photonic integrated circuit 5 is approximately several percent. In contrast, when the polarization directions of the optical pulses Pb1 and Pb2 input to the photonic integrated circuit 5 match the in-plane direction of the substrate 50 (when input in the TE mode), the ratio of the TM mode mixed into the TE mode in the optical pulses Pb1 and Pb2 output from the photonic integrated circuit 5 increases to approximately 20%. That is, when the optical pulses are input in the TM mode, the influence of polarization mixing is smaller than when the optical pulses are input in the TE mode.

In particular, in a waveguide curved in the in-plane direction in the photonic integrated circuit 5, such as a spiral waveguide, the influence of polarization mixing is even smaller when the optical pulses Pb1 and Pb2 are input in the TM mode compared to when the optical pulses Pb1 and Pb2 are input in the TE mode. In addition, when the photonic integrated circuit 5 includes waveguides that are close to each other in the in-plane direction, if the optical pulses Pb1 and Pb2 are input in the TE mode, leakage of the evanescent field tends to occur in the in-plane direction of the substrate 50, which may cause the optical pulses Pb1 and Pb2 guided through the waveguide to transfer to an adjacent waveguide. On the other hand, when the optical pulses Pb1 and Pb2 are input in the TM mode, leakage of the evanescent field tends to occur in a direction perpendicular to the in-plane direction of the substrate 50, and accordingly, it is possible to suppress the transfer of the optical pulses Pb1 and Pb2 between the waveguides.

Referring again to FIG. 1. The second adjustment unit 6 adjusts the polarization direction of the pulse train Pb, which has been output from the photonic integrated circuit 5 and in which chromatic dispersion has occurred. The second adjustment unit 6 matches the polarization direction of each of the optical pulses Pb1 and Pb2 of the pulse train Pb input to the subsequent correlation optical system 7 with the polarization direction of the correlation optical system 7. As will be described in detail later, in the present embodiment, the polarization direction of the correlation optical system 7 matches the polarization direction in the TE mode.

In one example, the inspection device 1 further includes a second polarization-maintaining fiber 12 that optically connects the optical output end 5b of the photonic integrated circuit 5 and the optical input end 7a of the correlation optical system 7. The second polarization-maintaining fiber 12 is, for example, a polarization-maintaining fiber that maintains the polarization direction of the pulse train Pb, similar to the first polarization-maintaining fiber 11.

The second adjustment unit 6 is a rotation mechanism that rotates the second polarization-maintaining fiber 12 around its axis. The axis of the second polarization-maintaining fiber 12 matches the traveling direction (X-axis direction) of the pulse train Pb. The second adjustment unit 6 is, for example, a fiber rotator. The second adjustment unit 6 receives, from the evaluation unit 9, an instruction regarding an angle for rotating the second polarization-maintaining fiber 12, for example. Based on this instruction, the second adjustment unit 6 may rotate the second polarization-maintaining fiber 12 around the axis of the second polarization-maintaining fiber 12. For example, the second adjustment unit 6 rotates the second polarization-maintaining fiber 12 around its axis by 90°. In this case, the polarization directions of the optical pulses Pb1 and Pb2 are rotated by 90°.

In the example shown in FIG. 1, the polarization mode of the optical pulses Pb1 and Pb2 is a TM mode at the time of being output from the photonic integrated circuit 5. That is, the polarization directions of the optical pulses Pb1 and Pb2 are perpendicular to the in-plane direction of the substrate 50. The second adjustment unit 6 converts the polarization mode of the optical pulses Pb1 and Pb2 into the TE mode. As a result, the polarization directions of the optical pulses Pb1 and Pb2 match the in-plane direction of the substrate 50. In addition, even if the polarization mode of the optical pulses Pb1 and Pb2 output from the photonic integrated circuit 5 is the TM mode, when the polarization direction of the correlation optical system 7 matches the polarization direction in the TM mode, conversion of the polarization mode of the optical pulses Pb1 and Pb2 by the second adjustment unit may not be performed.

The correlation optical system 7 generates correlation light, including cross-correlation light or auto-correlation light, of the pulse train Pb output from the photonic integrated circuit 5 through the waveguide 53. In the present embodiment, the correlation optical system 7 includes a lens 71, an optical element 72, and a lens 73. The lens 71 is provided on an optical path between the pulse forming unit 3 and the optical element 72, and condenses the pulse train Pb output from the second adjustment unit 6 onto the optical element 72.

The optical element 72 is, for example, a light-emitting body containing at least one of a nonlinear optical crystal that generates a second harmonic (SHG) and a phosphor. Examples of the nonlinear optical crystal include a KTP (KTiOPO₄) crystal, an LBO (LiB₃O₅) crystal, and a BBO (β-BaB₂O₄) crystal. Examples of the phosphor include coumarin, stilbene, and rhodamine. The optical element 72 receives the pulse train Pb as its input and generates correlation light Pc including the cross-correlation or auto-correlation of the pulse train Pb.

The optical element 72 has polarization dependence in a predetermined direction. For example, the optical element 72 is an element having polarization dependence in the polarization directions of the optical pulses Pb1 and Pb2 of the pulse train Pb. In the present embodiment, the polarization direction in which the optical element 72 has polarization dependence matches the polarization direction in the TE mode. Since the pulse train Pb is input to the correlation optical system 7 by the second adjustment unit 6 such that the polarization directions of the optical pulses Pb1 and Pb2 match the polarization direction in which the optical element 72 has polarization dependence, the correlation optical system 7 can efficiently generate the correlation light Pc. The lens 71 collimates or condenses the correlation light Pc output from the optical element 72.

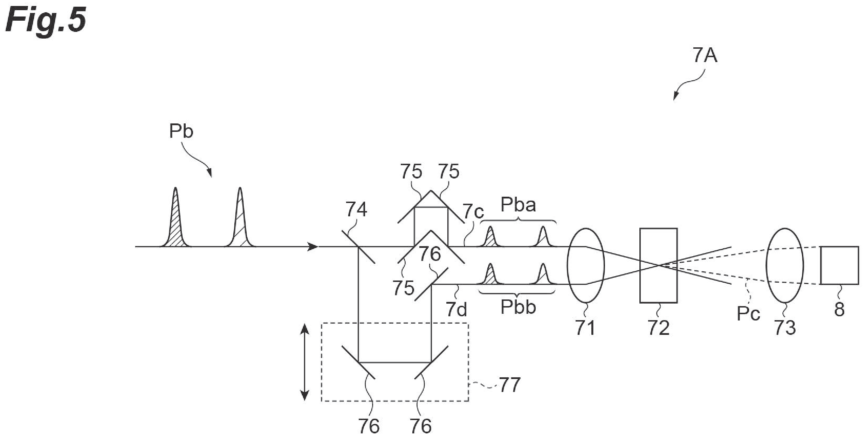

Here, an example of the configuration of the correlation optical system 7 will be described in detail. FIG. 5 is a drawing schematically showing an example of the configuration of the correlation optical system 7. This correlation optical system 7A includes a beam splitter 74 as an optical branching component that splits the pulse train Pb into two. The beam splitter 74 is optically coupled to the second adjustment unit 6 shown in FIG. 1, and transmits a part of the pulse train Pb input from the second adjustment unit 6 while reflecting the remainder. The splitting ratio of the beam splitter 74 is, for example, 1:1.

One pulse train Pba, which is split by the beam splitter 74, reaches the lens 71 through an optical path 7c including a plurality of mirrors 75. The other pulse train Pbb, which is split by the beam splitter 74, reaches the lens 71 through an optical path 7d including a plurality of mirrors 76. The optical length of the optical path 7c and the optical length of the optical path 7d are different from each other. Therefore, the plurality of mirrors 75 and the plurality of mirrors 76 form a delay optical system that provides a time difference between the one pulse train Pba and the other pulse train Pbb split by the beam splitter 74. In addition, at least some of the plurality of mirrors 76 are mounted on a movable stage 77, and the optical length of the optical path 7d is variable. Therefore, in this configuration, the time difference between the pulse train Pba and the pulse train Pbb can be made variable.

In this example, the optical element 72 includes a nonlinear optical crystal. The lens 71 condenses each of the pulse trains Pba and Pbb toward the optical element 72, and causes the optical axes of the pulse trains Pba and Pbb to cross each other at a predetermined angle in the optical element 72. As a result, in the optical element 72, which is a nonlinear optical crystal, a second harmonic is generated with the intersection of the pulse trains Pba and Pbb as its starting point. This second harmonic is the correlation light Pc, which includes the auto-correlation of the pulse train Pb. This correlation light Pc is collimated or condensed by the lens 73 and then input to the optical detection unit 8.

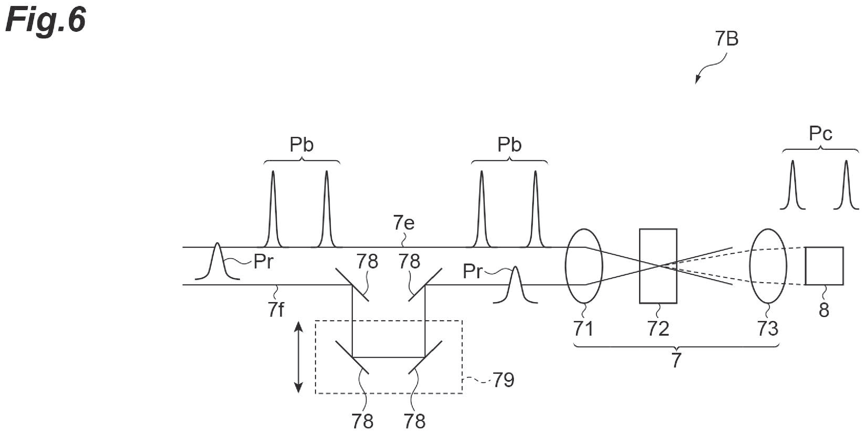

FIG. 6 is a drawing schematically showing another example of the configuration of the correlation optical system 7. In this correlation optical system 7B, the pulse train Pb reaches the lens 71 through an optical path 7e, and a reference optical pulse Pr, which is a single pulse, reaches the lens 71 through an optical path 7f. The optical path 7f includes a plurality of mirrors 78, and is bent in a U-shape. In addition, at least some of the plurality of mirrors 78 are mounted on a movable stage 79, and the optical length of the optical path 7f is variable. Therefore, in this configuration, the time difference between the pulse train Pb and the reference optical pulse Pr (difference in timing of reaching the lens 71) can be made variable.

In this example as well, the optical element 72 includes a nonlinear optical crystal. The lens 71 condenses the pulse train Pb and the reference optical pulse Pr toward the optical element 72, and causes the optical axis of the pulse train Pb and the optical axis of the reference optical pulse Pr to cross each other at a predetermined angle in the optical element 72. As a result, in the optical element 72, which is a nonlinear optical crystal, a second harmonic is generated with the intersection of the pulse train Pb and the reference optical pulse Pr as its starting point. This second harmonic is the correlation light Pc, which includes the cross-correlation of the pulse train Pb. This correlation light Pc is collimated or condensed by the lens 73 and then input to the optical detection unit 8.

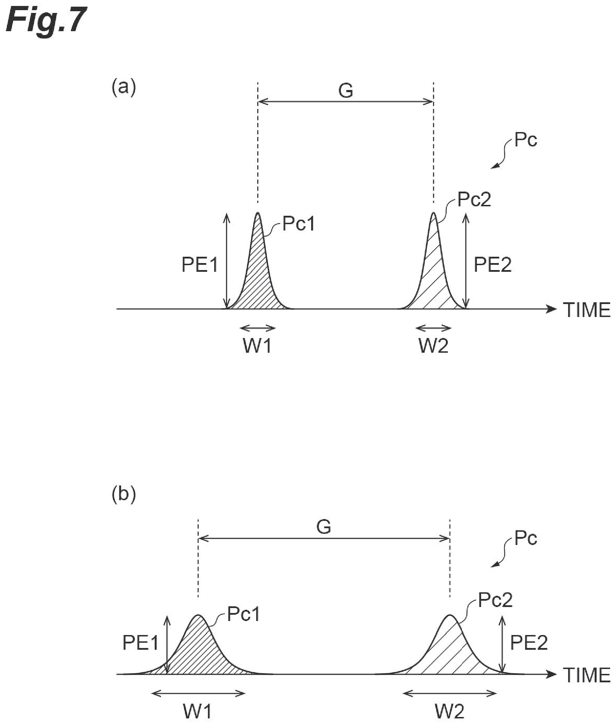

FIG. 7 is a drawing for conceptually explaining the feature quantity of the correlation light Pc. FIG. 7(a) shows an example of the time waveform of the correlation light Pc when no chromatic dispersion occurs in the pulse train Pb (chromatic dispersion is zero) in the waveguide 53 of the photonic integrated circuit 5. FIG. 7(b) shows an example of the time waveform of the correlation light Pc when chromatic dispersion occurs in the pulse train Pb (chromatic dispersion is not zero) in the waveguide 53 of the photonic integrated circuit 5. In the example shown in FIG. 7, the correlation light Pc includes two optical pulses Pc1 and Pc2 corresponding to the optical pulses Pb1 and Pb2, respectively. Here, the peak intensity of the optical pulse Pc1 is defined as PE1, and the peak intensity of the optical pulse Pc2 is defined as PE2. The full width at half maximum (FWHM) of the optical pulse Pc1 is defined as W1, and the full width at half maximum of the optical pulse Pc2 is defined as W2. The peak time interval (pulse interval) between the peak of the optical pulse Pc1 and the peak of the optical pulse Pc2 is defined as G.

As shown in FIGS. 7(a) and 7(b), when chromatic dispersion occurs in the pulse train Pb, the peak intensities PE1 and PE2 of the optical pulses Pc1 and Pc2 are lower and the full widths at half maximum W1 and W2 of the optical pulses Pc1 and Pc2 are larger than those when chromatic dispersion does not occur. In addition, the peak time interval G becomes longer.

Thus, when chromatic dispersion occurs in the pulse train Pb, the feature quantities (the peak intensities PE1 and PE2, the full widths at half maximum W1 and W2, and the peak time interval G) of the time waveform of the correlation light Pc change significantly compared to the case where no chromatic dispersion occurs. Then, the amount of change depends on the amount of chromatic dispersion of the pulse train Pb in the waveguide 53. Therefore, by observing the changes in the feature quantities of the time waveform of the correlation light Pc, the amount of chromatic dispersion of the pulse train Pb in the waveguide 53 can be found out accurately and easily.

Referring again to FIG. 1. The optical detection unit 8 receives the correlation light Pc output from the correlation optical system 7 and detects the time waveform of the correlation light Pc. The optical detection unit 8 includes a photodetector, such as a photodiode, for example. The optical detection unit 8 detects the time waveform of the correlation light Pc by converting the intensity of the correlation light Pc into an electrical signal. The electrical signal, which is the detection result, is provided to the evaluation unit 9.

The evaluation unit 9 estimates the amount of chromatic dispersion based on the feature quantities of the time waveform of the correlation light Pc provided from the optical detection unit 8, and evaluates the waveguide 53 of the photonic integrated circuit 5. As described above, when the correlation light Pc including the cross-correlation or auto-correlation of the pulse train Pb is generated, various feature quantities (for example, pulse interval, peak intensity, and pulse width) in the time waveform of the correlation light Pc have a significant correlation with the amount of chromatic dispersion of the measurement target. Therefore, the evaluation unit 9 can accurately estimate the amount of chromatic dispersion of the pulse train Pb in the photonic integrated circuit 5, which is a measurement target, by evaluating the feature quantities of the time waveform of the correlation light Pc. For example, the evaluation unit 9 may evaluate whether or not adjustment of the waveguide 53 is required based on the estimated amount of chromatic dispersion. When it is evaluated that adjustment of the waveguide 53 is required, the evaluation unit 9 may adjust the temperature of the waveguide 53 by heating the microheater 58, thereby adjusting the amount of chromatic dispersion of the optical pulses Pb1 and Pb2.

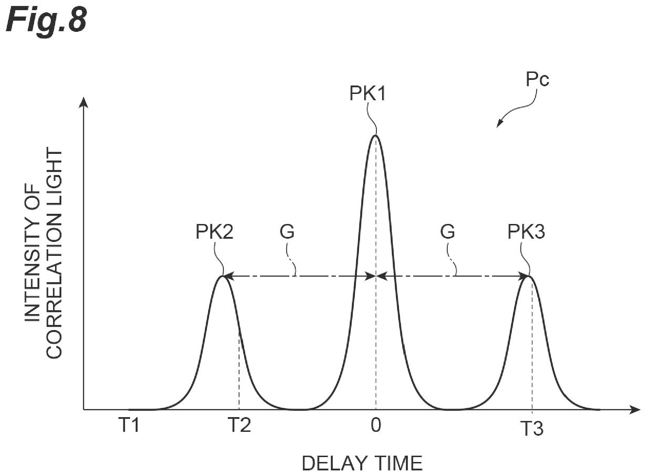

The time waveform of the correlation light Pc will be described in more detail. FIG. 8 is a graph showing an example of the time waveform of the correlation light Pc. The horizontal axis of the graph of the time waveform of the correlation light Pc indicates delay time, and the vertical axis of the graph of the time waveform of the correlation light Pc indicates the intensity of the correlation light Pc.

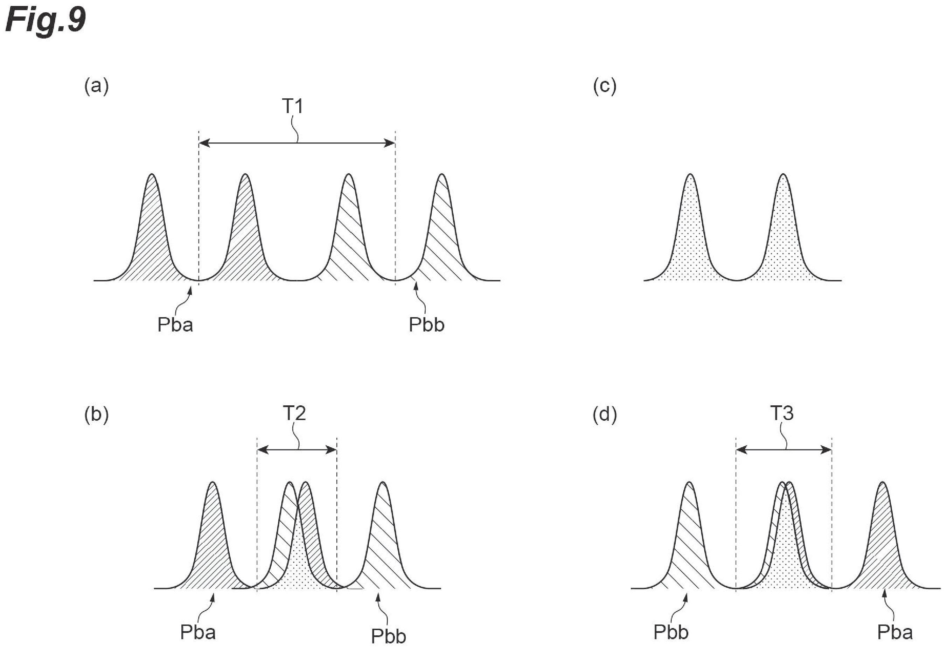

In the correlation optical system 7A shown in FIG. 5, the pulse train Pb is split into the pulse train Pba and the pulse train Pbb by the beam splitter 74. Then, the pulse train Pba and the pulse train Pbb are input to the optical element 72. In the optical element 72, the correlation light Pc, which is a second harmonic, is generated, and the correlation light Pc is input to the optical detection unit 8. The optical detection unit 8 detects the intensity of the correlation light Pc. The intensity of the correlation light Pc changes depending on the time difference between the pulse train Pba and the pulse train Pbb, in other words, the delay time of the pulse train Pba with respect to the pulse train Pbb, or the delay time of the pulse train Pbb with respect to the pulse train Pba. The delay time is adjusted by the movable stage 77. As for the delay time, as shown in FIGS. 9(a) to 9(d), times from the middle of the two pulses included in the pulse train Pba to the middle of the two pulses included in the pulse train Pbb are defined as delay times T1, T2, and T3.

The optical detection unit 8 includes, for example, a control unit in addition to a photodetector, and the control unit changes the delay time by gradually changing the position of the movable stage 77. In addition, the control unit may include, for example, a counter to measure the delay time each time the pulse train Pb is input. Then, the control unit may generate the time waveform of the correlation light Pc by plotting the intensity of the electrical signal of the correlation light Pc detected by the photodetector for each measured delay time.

In the example shown in FIG. 8, the intensity of the correlation light Pc is shown for cases where the delay time is T1, T2, 0, and T3. As shown in FIG. 9(a), the delay time T1 is the delay time of the pulse train Pba with respect to the pulse train Pbb. At the delay time T1, the pulse train Pba lags behind the pulse train Pbb, and the pulse train Pbb and the pulse train Pba do not overlap at all. As shown in FIG. 9(b), the delay time T2 is the delay time of the pulse train Pba with respect to the pulse train Pbb. At the delay time T2, the pulse train Pba lags behind the pulse train Pbb, and a part of the pulse train Pbb and a part of the pulse train Pba overlap each other. The case where the delay time is 0 is a case where there is no time difference between the pulse train Pba and the pulse train Pbb, as shown in FIG. 9(c). In this case, the pulse train Pbb and the pulse train Pba completely overlap each other. As shown in FIG. 9(d), the delay time T3 is the delay time of the pulse train Pbb with respect to the pulse train Pba. At the delay time T3, the pulse train Pbb lags behind the pulse train Pba, and a part of the pulse train Pbb and a part of the pulse train Pba overlap each other.

As shown in FIGS. 8 and 9, the smaller the time difference between the pulse train Pba and the pulse train Pbb and the larger the overlapping area between the pulse train Pbb and the pulse train Pba, the stronger the light intensity of the correlation light Pc becomes. The time waveform of the correlation light Pc includes a first peak PK1, a second peak PK2, and a third peak PK3. The first peak PK1 occurs when the delay time is 0. The second peak PK2 occurs when the pulse train Pba lags behind the pulse train Pbb and one of the two pulses in the pulse train Pbb completely overlaps one of the two pulses in the pulse train Pba. The third peak PK3 occurs when the pulse train Pbb lags behind the pulse train Pba and the other of the two pulses in the pulse train Pbb completely overlaps the other of the two pulses in the pulse train Pba.

The optical detection unit 8 detects, for example, the interval between the first peak PK1 and the second peak PK2 or the interval between the first peak PK1 and the third peak PK3, as the peak time interval G, which is a type of feature quantity of the time waveform. The optical detection unit 8 may provide the detected peak time interval G to the evaluation unit 9.

In the example described above, the case where the control unit included in the optical detection unit 8 generates the time waveform of the correlation light Pc has been described. However, the evaluation unit 9 may generate the time waveform of the correlation light Pc. That is, the evaluation unit 9 may function as an optical detection unit. In this case, the optical detection unit 8 may include a photodetector and output the electrical signal of the detected correlation light Pc to the evaluation unit 9. Alternatively, the evaluation unit 9 may include a photodetector instead of the optical detection unit 8. In this case, the correlation light Pc may be input from the correlation optical system 7A to the evaluation unit 9, and the photodetector of the evaluation unit 9 may detect the time waveform of the correlation light Pc and convert the intensity of the correlation light Pc into an electrical signal. The evaluation unit 9 may generate the time waveform of the correlation light Pc by plotting the intensity of the electrical signal of the correlation light Pc output from the optical detection unit 8 or the intensity of the electrical signal converted by the photodetector of the evaluation unit 9, for each measured delay time. The evaluation unit 9 may change the delay time by gradually changing the position of the movable stage 77.

In the example described above, the correlation optical system 7A has been described as an example, but the example described above may also be applied to the correlation optical system 7B. In this case, the optical detection unit 8 or the evaluation unit 9 may change the delay time of the pulse train Pb with respect to the reference optical pulse Pr or the delay time of the reference optical pulse Pr with respect to the pulse train Pb by gradually changing the position of the movable stage 79. Then, the optical detection unit 8 or the evaluation unit 9 may generate the time waveform of the correlation light Pc by plotting the intensity of the electrical signal of the correlation light Pc for each measured delay time. Even when applied to the correlation optical system 7B, the evaluation unit 9 may function as an optical detection unit, similar to when applied to the correlation optical system 7A.

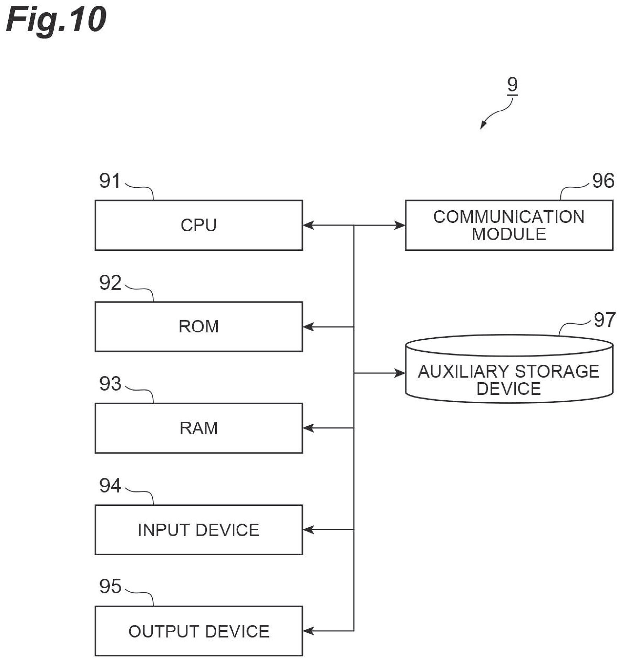

FIG. 10 is a diagram schematically showing an example of the hardware configuration of the evaluation unit 9. As shown in FIG. 10, the evaluation unit 9 may be physically configured as a typical computer including a processor (CPU) 91, main storage devices such as a ROM 92 and a RAM 93, an input device 94 such as a keyboard, a mouse, and a touch screen, an output device 95 such as a display (including a touch screen), a communication module 96 such as a network card for transmitting and receiving data to and from other devices, and an auxiliary storage device 97 such as a hard disk.

The processor 91 of the computer can realize the functions of the evaluation unit 9 described above through a chromatic dispersion amount calculation program. In other words, the chromatic dispersion amount calculation program causes the processor 91 of the computer to operate as the evaluation unit 9. The chromatic dispersion amount calculation program is stored in an internal or external storage device (storage medium) of the computer, such as the auxiliary storage device 97. The storage device may be a non-transitory recording medium. Examples of the recording medium include recording media such as a flexible disk, a CD, and a DVD, a recording medium such as a ROM, a semiconductor memory, and a cloud server.

The auxiliary storage device 97 stores the feature quantities of the time waveform of the correlation light Pc, which have been theoretically calculated in advance assuming that chromatic dispersion is zero. For this reason, the evaluation unit 9 can check the amount of change in the feature quantities of the correlation light Pc due to chromatic dispersion by comparing the feature quantities stored in the auxiliary storage device 97 with the feature quantities of the time waveform detected by the optical detection unit 8. Therefore, the evaluation unit 9 can estimate the amount of chromatic dispersion of the measurement target by comparing the feature quantities stored in the auxiliary storage device 97 with the feature quantities of the time waveform detected by the evaluation unit 9.

Alternatively, the evaluation unit 9 may estimate the amount of chromatic dispersion of the measurement target by comparing the feature quantities of the correlation light Pc in a state with the measurement target with the feature quantities of the correlation light Pc in a state without the measurement target. Specifically, the evaluation unit 9 can estimate the amount of chromatic dispersion of the photonic integrated circuit 5 by comparing the feature quantities of the time waveform of the correlation light Pc detected through the photonic integrated circuit 5 with the feature quantities of the time waveform of the correlation light Pc detected without passing through the photonic integrated circuit 5.

### [Inspection method using an inspection device]

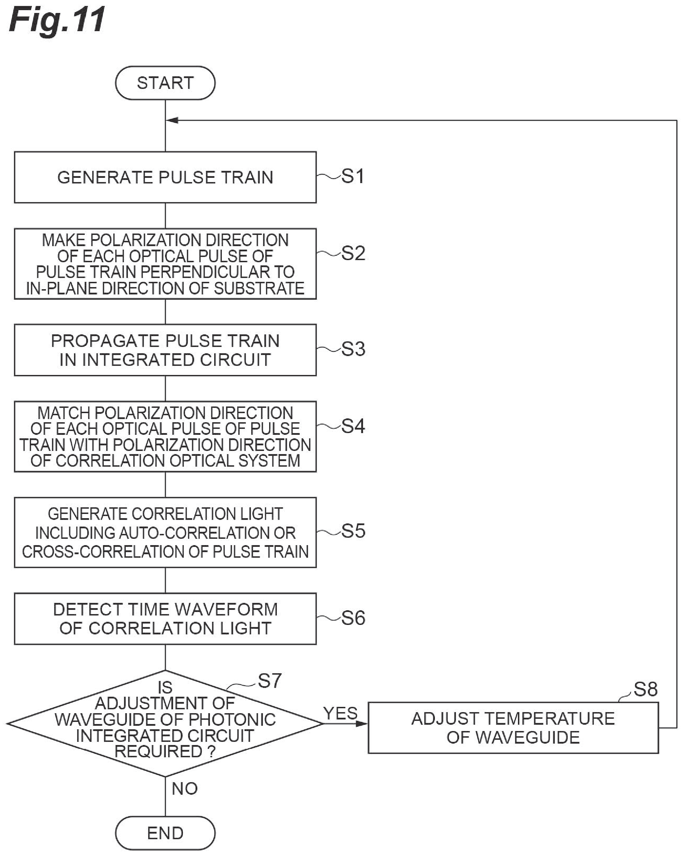

FIG. 11 is a flowchart showing an inspection method using the inspection device 1 having the above-described configuration. In this method, first, in a pulse forming step S1, the pulse train Pb is generated in which a plurality of optical pulses Pb1 and Pb2 having different center wavelengths are arranged at predetermined time intervals. For example, a plurality of wavelength components included in the optical pulse to be measured Pa are spatially separated for each wavelength, intensity modulation and phase modulation are performed on the plurality of wavelength components using the spatial light modulator 33, and then the plurality of wavelength components are condensed. In this manner, it is possible to easily generate the pulse train Pb.

Then, in a first adjustment step S2, the polarization direction of each of the optical pulses Pb1 and Pb2 of the pulse train Pb input to the photonic integrated circuit 5 is made perpendicular to the in-plane direction of the substrate 50. For example, the first polarization-maintaining fiber 11, which optically connects the pulse forming unit 3 and the photonic integrated circuit 5, is rotated around its axis using a rotation mechanism. The first polarization-maintaining fiber 11 is rotated such that the polarization directions of the optical pulses Pb1 and Pb2 are perpendicular to the in-plane direction of the substrate 50.

Then, in a propagation step S3, the pulse train Pb is propagated through the waveguide 53 of the photonic integrated circuit 5. The optical pulses Pb1 and Pb2, whose polarization directions have been rotated in the first adjustment step S2, are input from the optical input section 51, guided by the waveguide 53, and then output from the optical output section 52. In the propagation step S3, chromatic dispersion occurs in the pulse train Pb while the pulse train Pb propagates through the waveguide 53. For example, a difference arises between the propagation time of the optical pulse Pb1 and the propagation time of the optical pulse Pb2, causing the time interval between the optical pulse Pb1 and the optical pulse Pb2 to fluctuate.

Then, in a second adjustment step S4, the polarization direction of each of the optical pulses Pb1 and Pb2 of the pulse train Pb input to the correlation optical system 7 is made to match the polarization direction of the correlation optical system 7. For example, the second polarization-maintaining fiber 12, which optically connects the photonic integrated circuit 5 and the correlation optical system 7, is rotated around its axis using a rotation mechanism. The second polarization-maintaining fiber 12 is rotated such that the polarization directions of the optical pulses Pb1 and Pb2 match the polarization direction of the correlation optical system 7.

Then, in a correlation light generation step S5, the correlation light Pc including the cross-correlation or auto-correlation of the pulse train Pb is generated using the optical element 72 containing at least one of a nonlinear optical crystal and a phosphor. For example, the pulse train Pb is split into two as shown in FIG. 5, one split pulse train Pbb is time-delayed with respect to the other pulse train Pba, and the correlation light Pc including the auto-correlation of the pulse train Pb is generated based on the time-delayed one pulse train Pbb and the other pulse train Pba.

Then, the time waveform of the correlation light Pc is detected in an optical detection step S6, and then the waveguide 53 of the photonic integrated circuit 5 is evaluated in an evaluation step S7 based on the feature quantities of the time waveform. For example, the amount of chromatic dispersion of the pulsed laser light source 2 is estimated based on at least one of the peak intensities E1 and E2, the full widths at half maximum W1 and W2, and the peak time interval G of the correlation light Pc. At this time, in the evaluation step S7, the amount of chromatic dispersion of the measurement target may be estimated by comparing the feature quantities of the correlation light Pc in a state with the measurement target with the feature quantities of the correlation light Pc in a state without the measurement target. In this case, in the optical detection step S6, the time waveform of the correlation light Pc detected without passing through the photonic integrated circuit 5 is also detected.

In addition, in the evaluation step S7, for example, the amount of chromatic dispersion estimated by the evaluation unit 9 may be compared with a predetermined threshold value. Then, in the evaluation step S7, if the estimated amount of chromatic dispersion exceeds the threshold value, the evaluation unit 9 may evaluate that adjustment of the waveguide 53 of the photonic integrated circuit 5 is required (evaluation step S7: YES), and if the estimated amount of chromatic dispersion is below the threshold value, the evaluation unit 9 may determine that adjustment of the waveguide 53 of the photonic integrated circuit 5 is not required (evaluation step S7: NO).

If the evaluation unit 9 evaluates that adjustment of the waveguide 53 of the photonic integrated circuit 5 is required (evaluation step S7: YES), the temperature of the waveguide 53 is adjusted in step S8. For example, the evaluation unit 9 gives an instruction regarding a set temperature to the microheater 58, and the microheater 58 increases its temperature until the temperature of the microheater 58 reaches the set temperature. After the temperature of the microheater 58 reaches the set temperature, the microheater 58 may maintain the set temperature. As a result, a part of the waveguide 53 is heated at the set temperature. The microheater 58 may heat a part of the waveguide 53 at the set temperature for a predetermined period of time, or the microheater 58 may receive an instruction from the evaluation unit 9 regarding the heating time and heat a part of the waveguide 53 at the set temperature for the instructed heating time.

After the heating time for a part of the waveguide 53 by the microheater 58 has passed in step S8, the pulse forming step S1 to the evaluation step S7 are repeated again. In the evaluation step S7, if the evaluation unit 9 evaluates again that adjustment of the waveguide 53 of the photonic integrated circuit 5 is required (evaluation step S7: YES), the temperature of the waveguide 53 is adjusted again in step S8. For example, the evaluation unit 9 gives an instruction regarding a new set temperature to the microheater 58, and the microheater 58 heats a part of the waveguide 53 at the new set temperature. The new set temperature may be higher than the previous set temperature. In the inspection method shown in FIG. 4, in the evaluation step S7, adjustment of the temperature of the waveguide 53 is repeated until the evaluation unit 9 determines that adjustment of the waveguide 53 of the photonic integrated circuit 5 is not required. If the evaluation unit 9 determines that adjustment of the waveguide 53 of the photonic integrated circuit 5 is not required (evaluation step S7: NO), the flow of the series of inspection methods is completed.

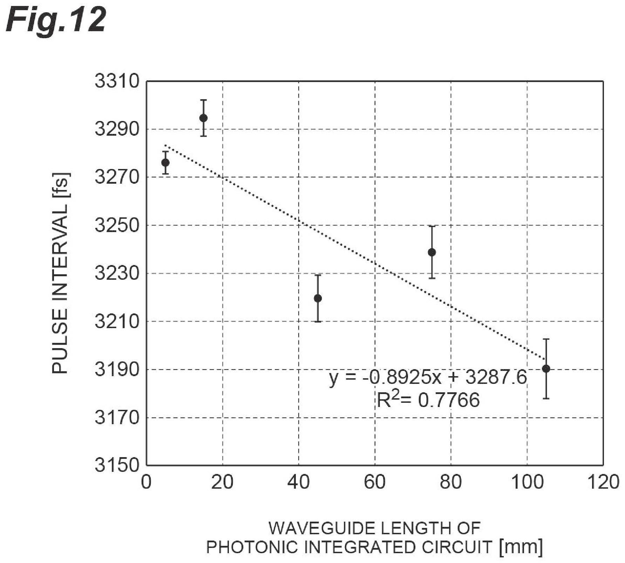

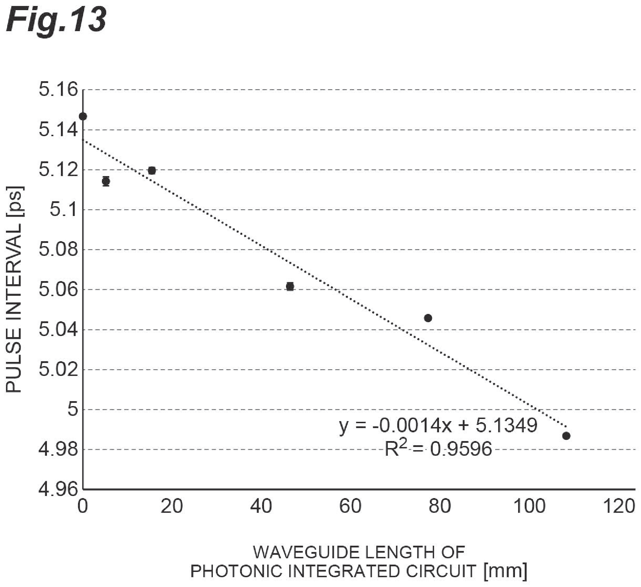

The effects of the inspection device 1 will be described with reference to FIGS. 12 and 13. FIGS. 12 and 13 are graphs showing the relationship between the waveguide length of the waveguide 53 of the photonic integrated circuit 5 and the pulse interval. Hereinafter, the pulse interval corresponds to the peak time interval G. FIG. 12 shows the relationship between the waveguide length of the waveguide 53 and the pulse interval when an inspection device according to a comparative example is used, and FIG. 13 shows the relationship between the waveguide length of the waveguide 53 and the pulse interval when the inspection device 1 is used. The main differences between the inspection device 1 and the inspection device according to the comparative example are as follows. In the inspection device 1, the pulse train Pb is input to the photonic integrated circuit 5 in a direction in which the polarization directions of the optical pulses Pb1 and Pb2 are perpendicular to the in-plane direction of the substrate 50. In contrast, in the inspection device according to the comparative example, the pulse train Pb is input to the photonic integrated circuit 5 in a direction in which the polarization directions of the optical pulses Pb1 and Pb2 match the in-plane direction of the substrate 50. In the examples shown in FIGS. 12 and 13, the wavelength difference between the center wavelength of the optical pulse Pb1 and the center wavelength of the optical pulse Pb2 is 25 nm.

In the inspection device 1, the wavelength difference set in the spatial light modulator 33 is larger than that in the inspection device according to the comparative example. In the inspection device 1, the connection terminal that connects the optical input end 5a of the photonic integrated circuit 5 and the first polarization-maintaining fiber 11 and the connection terminal that connects the optical output end 5b of the photonic integrated circuit 5 and the second polarization-maintaining fiber 12 are formed of materials that are less susceptible to chromatic dispersion. The inspection device 1 does not include members that may disturb the polarization directions of the optical pulses Pb1 and Pb2.

As shown in FIGS. 12 and 13, the pulse interval tends to decrease as the length of the waveguide 53 increases. The length of the waveguide 53 and the pulse interval show a linear relationship. FIGS. 12 and 13 show the results obtained, for example, when the optical detection unit 8 detects the pulse interval five times consecutively for each waveguide length and the evaluation unit 9 calculates an average value and a standard deviation based on the data provided by the optical detection unit 8. In the inspection device according to the comparative example, the standard deviation at each plot point is larger than that in the inspection device 1. Assuming that the standard deviation is a measurement error, the maximum measurement error in the inspection device according to the comparative example is 10 fs (femtoseconds). In contrast, the maximum measurement error in the inspection device 1 is 1 fs.

FIGS. 12 and 13 show, for example, a function and a coefficient of determination R² when the evaluation unit 9 calculates a linear regression model. The coefficient of determination R² in the inspection device according to the comparative example is 0.7766, whereas the coefficient of determination R² in the inspection device 1 is 0.9596. From the above, the inspection device 1 can significantly reduce measurement error compared to the inspection device according to the comparative example, and accordingly, it is possible to perform accurate inspection of the photonic integrated circuit 5.

As described above, in the inspection device 1 according to one aspect of the present disclosure, the pulse train Pb is input to the photonic integrated circuit 5 by the first adjustment unit 4 such that the polarization direction of each of the plurality of optical pulses Pb1 and Pb2 is perpendicular to the in-plane direction of the substrate 50. This makes polarization mixing less likely to occur in the pulse train Pb output from the photonic integrated circuit 5. As a result, the generation efficiency of the correlation light Pc in the correlation optical system 7 is increased, and at the same time, noise components that distort the correlation waveform are reduced, thereby improving the detection accuracy of the time waveform and reducing measurement errors of the amount of chromatic dispersion. In this manner, since polarization mixing of the pulse train Pb output from the photonic integrated circuit 5 is suppressed to reduce measurement errors of the amount of chromatic dispersion, it is possible to perform accurate inspection of the photonic integrated circuit 5.

The inspection device 1 further includes the first polarization-maintaining fiber 11 that optically connects the pulse forming unit 3 to the photonic integrated circuit 5, and the first adjustment unit 4 is a rotation mechanism that rotates the first polarization-maintaining fiber 11 around its axis. In this case, the polarization direction of each of the optical pulses Pb1 and Pb2 of the pulse train Pb input to the photonic integrated circuit 5 can be easily adjusted by rotating the first polarization-maintaining fiber 11 around its axis.

The inspection device 1 further includes the second polarization-maintaining fiber 12 that optically connects the photonic integrated circuit 5 to the correlation optical system 7, and the second adjustment unit 6 is a rotation mechanism that rotates the second polarization-maintaining fiber 12 around the axis of the second polarization-maintaining fiber 12. In this case, the polarization direction of each of the optical pulses Pb1 and Pb2 of the pulse train Pb input to the second polarization-maintaining fiber 12 can be easily adjusted by rotating the in-plane direction of the substrate 50 of the photonic integrated circuit 5 around the axis of the second polarization-maintaining fiber 12.

The inspection device 1 further includes the second adjustment unit 6 that matches the polarization direction of each of the optical pulses Pb1 and Pb2 of the pulse train Pb input to the correlation optical system 7 with the polarization direction of the correlation optical system 7. In this case, the pulse train Pb is input to the correlation optical system 7 by the second adjustment unit 6 such that the polarization direction of the pulse train Pb matches a polarization direction in which the correlation optical system 7 has polarization dependence. Therefore, the correlation light Pc can be efficiently generated in the correlation optical system 7. By increasing the generation efficiency of the correlation light Pc in the correlation optical system 7 and simultaneously reducing noise components that distort the correlation waveform, measurement errors of the amount of chromatic dispersion are further reduced, enabling even more accurate inspection of the photonic integrated circuit 5.

The inspection device 1 further includes the second polarization-maintaining fiber 12 that optically connects the photonic integrated circuit 5 to the correlation optical system 7, and the second adjustment unit 6 is a rotation mechanism that rotates the second polarization-maintaining fiber 12 around the axis of the second polarization-maintaining fiber 12. In this case, the polarization direction of each of the optical pulses Pb1 and Pb2 of the pulse train Pb input to the second polarization-maintaining fiber 12 can be easily adjusted by rotating the in-plane direction of the substrate 50 of the photonic integrated circuit 5 around the axis of the second polarization-maintaining fiber 12.

The pulse forming unit 3 includes the spatial light modulator 33 that sets at least one of the wavelength difference, time difference, and wavelength width of a plurality of the optical pulses Pb1 and Pb2 to an arbitrary magnitude. In this case, for example, by increasing the wavelength difference between the optical pulses Pb1 and Pb2 in the pulse train Pb, the pulse interval (time difference) between the optical pulses Pb1 and Pb2 can be increased. As the pulse interval between the optical pulses Pb1 and Pb2 increases, measurement errors of the amount of chromatic dispersion are relatively reduced, enabling more accurate inspection of the photonic integrated circuit 5. In addition, for example, by increasing the wavelength width of each of the plurality of optical pulses Pb1 and Pb2 using the pulse forming unit 3, the pulse widths of the optical pulses Pb1 and Pb2 are reduced, so that the repetitive measurement error of the amount of chromatic dispersion can be relatively reduced. As a result, it is possible to perform more accurate inspection of the photonic integrated circuit 5.

In the inspection method described above, in the first adjustment step, the pulse train Pb is input to the photonic integrated circuit 5 such that the polarization direction of each of the plurality of optical pulses Pb1 and Pb2 is perpendicular to the in-plane direction of the substrate 50. This makes polarization mixing less likely to occur in the pulse train Pb output from the photonic integrated circuit 5. As a result, the generation efficiency of the correlation light Pc in the correlation optical system 7 is increased, and at the same time, noise components that distort the correlation waveform are reduced, thereby improving the detection accuracy of the time waveform and reducing measurement errors of the chromatic dispersion. In this manner, since polarization mixing of the pulse train Pb output from the photonic integrated circuit 5 is suppressed to reduce measurement errors of the amount of chromatic dispersion, it is possible to perform accurate inspection of the photonic integrated circuit 5.

The inspection method further includes a second adjustment step for matching the polarization direction of each of the optical pulses Pb1 and Pb2 of the pulse train Pb input to the correlation optical system 7 with the polarization direction of the correlation optical system 7. In this case, in the second adjustment step S4, the pulse train Pb is input to the correlation optical system 7 such that the polarization direction of the pulse train Pb matches the polarization direction in which the correlation optical system 7 has polarization dependence. Therefore, the correlation light Pc can be efficiently generated in the correlation optical system 7. By increasing the generation efficiency of the correlation light Pc in the correlation optical system 7 and reducing noise components that distort the correlation waveform, measurement errors of the amount of chromatic dispersion are further reduced, enabling even more accurate inspection of the photonic integrated circuit 5.

In the evaluation step S7, the amount of chromatic dispersion of the photonic integrated circuit 5 is calculated based on the feature quantities of the time waveform of the correlation light Pc detected through the photonic integrated circuit 5 and the feature quantities of the time waveform of the correlation light Pc detected without passing through the photonic integrated circuit 5. In this case, by calculating the relative amount of dispersion with respect to the feature quantities of the time waveform of the correlation light detected through the photonic integrated circuit using, as a reference point, the feature quantities of the time waveform of the correlation light detected without passing through the photonic integrated circuit, it is possible to improve the measurement robustness (stability against external factors such as environmental changes and laser instability) of the system.

In the evaluation step S7, the amount of chromatic dispersion of the photonic integrated circuit 5 is calculated based on the feature quantities of the time waveform of the correlation light Pc, which is theoretically calculated in advance assuming that the chromatic dispersion is zero, and the feature quantities of the time waveform of the correlation light Pc detected in the optical detection step S6. In this case, the amount of chromatic dispersion can be efficiently calculated using the feature quantities calculated in advance.

### [Modification examples]

While the embodiments of the present disclosure have been described above, the present disclosure is not necessarily limited to the embodiments described above, and various changes can be made without departing from the scope of the present disclosure.

In the inspection devices according to first to sixth modification examples, the first adjustment unit 4 and the second adjustment unit 6 adjust the polarization direction of each of the optical pulses Pb1 and Pb2 of the pulse train Pb by means other than rotating the first polarization-maintaining fiber 11 and the second polarization-maintaining fiber 12 using a fiber rotator.

### [First modification example]

In the inspection device according to the first modification example, the first adjustment unit 4 is a rotation mechanism that rotates the in-plane direction of the substrate 50 around the axis of the first polarization-maintaining fiber 11, instead of rotating the first polarization-maintaining fiber 11. For example, the rotation mechanism rotates the substrate 50 such that the in-plane direction of the substrate 50 is perpendicular to the polarization directions of the optical pulses Pb1 and Pb2. In this case, the rotation mechanism is, for example, a stage mechanism such as a goniometer stage. Therefore, the first adjustment unit 4 can easily adjust the polarization direction of each of the optical pulses Pb1 and Pb2 of the pulse train Pb input to the photonic integrated circuit 5. In addition, similarly, the second adjustment unit 6 may also be a rotation mechanism that rotates the in-plane direction of the substrate 50 around the axis of the second polarization-maintaining fiber 12, instead of rotating the second polarization-maintaining fiber 12.

### [Second to fourth modification examples]

The rotation mechanism forming each of the first adjustment unit 4 and the second adjustment unit 6 is not limited to the fiber rotator and can be replaced with various modification examples. In the following examples, a plurality of examples of the rotation mechanism will be described.

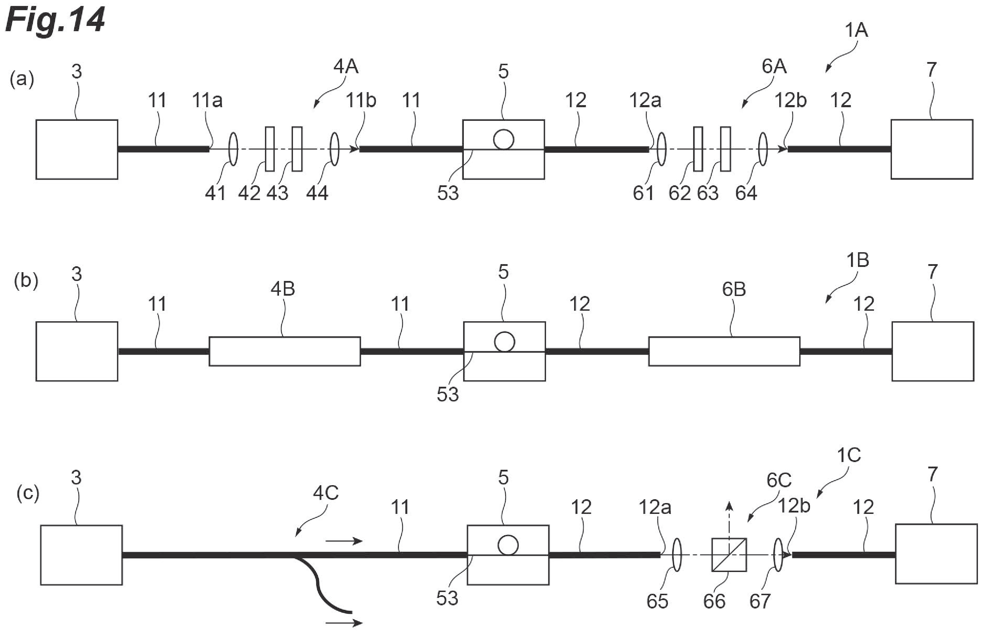

FIG. 14(a) is a drawing schematically showing an inspection device 1A according to the second modification example. In the inspection device 1A, a rotation mechanism forming a first adjustment unit 4A includes a lens 41, a half-wave plate 42, a polarizing plate 43, and a lens 44. The first polarization-maintaining fiber 11 is spatially separated between the pulse forming unit 3 and the photonic integrated circuit 5. Therefore, the first polarization-maintaining fiber 11 includes an end 11a on the pulse forming unit 3 side and an end 11b on the photonic integrated circuit 5 side as ends in exposed to space. The rotation mechanism is disposed along the axis of the first polarization-maintaining fiber 11 between the end 11a and the end 11b.

A rotation mechanism forming a second adjustment unit 6A includes a lens 61, a half-wave plate 62, a polarizing plate 63, and a lens 64. The second polarization-maintaining fiber 12 is spatially separated between the photonic integrated circuit 5 and the correlation optical system 7. Therefore, the second polarization-maintaining fiber 12 includes an end 12a on the photonic integrated circuit 5 side and an end 12b on the correlation optical system 7 side as ends exposed to space. The rotation mechanism is disposed along the axis of the second polarization-maintaining fiber 12 between the end 12a and the end 12b. Hereinafter, the first adjustment unit 4A will be described as an example, but the same explanation applies to the second adjustment unit 6A.

In the inspection device 1A, the pulse train Pb output from the pulse forming unit 3 propagates through the first polarization-maintaining fiber 11 and is output from the end 11a to the lens 41. The lens 41 converts the pulse train Pb into a plane wave and guides it to the half-wave plate 42 as a plane wave. A plane wave is, for example, a light wave of a collimated beam whose wavefronts form parallel planes. The half-wave plate 42 includes two optical axes having different refractive indices with respect to the vibration direction of light. When the pulse train Pb passes through the half-wave plate, the components of light along these two axes travel at different speeds. By appropriately determining the optical axis using such characteristics of the half-wave plate, the vibration direction of the pulse train Pb can be rotated by 90°. As a result, for example, the polarization mode of the optical pulses Pb1 and Pb2 of the pulse train Pb is converted from the TE mode to the TM mode.

The pulse train Pb output from the half-wave plate 42 is input to the polarizing plate 43. The polarizing plate 43 allows light vibrating in a specific direction to pass therethrough while blocking light vibrating in other directions. For example, when the polarizing plate 43 allows only the optical pulses Pb1 and Pb2 in the TM mode to pass therethrough, the polarizing plate 43 blocks TE-mode components mixed in the optical pulses Pb1 and Pb2 of the pulse train Pb. The lens 44 condenses the pulse train Pb output from the polarizing plate 43 and guides it to the end 11b of the first polarization-maintaining fiber 11.

FIG. 14(b) is a drawing schematically showing an inspection device 1B according to the third modification example. In the inspection device 1B, a rotation mechanism forming each of a first adjustment unit 4B and a second adjustment unit 6B includes a paddle-type polarization controller. The paddle-type polarization controller includes a paddle-shape wave plate in which the first polarization-maintaining fiber 11 and the second polarization-maintaining fiber 12 are wound in a coil shape. The paddle-type polarization controller rotates the polarization of the optical pulses Pb1 and Pb2 propagating through the first polarization-maintaining fiber 11 and the second polarization-maintaining fiber 12 by rotating this wave plate.

FIG. 14(c) is a drawing schematically showing an inspection device 1C according to the fourth modification example. In the inspection device 1C, a rotation mechanism forming a first adjustment unit 4C includes a fiber polarization splitter. A rotation mechanism forming a second adjustment unit 6C includes a lens 65, a polarizing beam splitter 66, and a lens 67. The second polarization-maintaining fiber 12 is spatially separated between the photonic integrated circuit 5 and the correlation optical system 7. As a result, the second polarization-maintaining fiber 12 includes an end 12a on the photonic integrated circuit 5 side and an end 12b on the correlation optical system 7 side as ends in contact with space. The rotation mechanism is disposed along the axis of the second polarization-maintaining fiber 12 between the end 12a and the end 12b.

The fiber polarization splitter includes two branched waveguides. One waveguide is continuous with the first polarization-maintaining fiber 11, and the other waveguide branches from the first polarization-maintaining fiber 11. The fiber polarization splitter causes the optical pulses Pb1 and Pb2 to propagate through the two waveguides according to the polarization directions of the optical pulses Pb1 and Pb2. For example, the fiber polarization splitter causes the TM-mode components of the optical pulses Pb1 and Pb2 to propagate through one waveguide and the TE-mode components to propagate through the other waveguide. As a result, the optical pulses Pb1 and Pb2 are input to the photonic integrated circuit 5 in the polarization mode of the TM mode.

The lens 65 converts the pulse train Pb output from the end 12a into a plane wave and guides it to the polarizing beam splitter 66 as a plane wave. The polarizing beam splitter 66 reflects or transmits the optical pulses Pb1 and Pb2 according to the polarization directions of the optical pulses Pb1 and Pb2. For example, the polarizing beam splitter 66 reflects the TM-mode components of the optical pulses Pb1 and Pb2 and transmits the TE-mode components. As a result, the optical pulses Pb1 and Pb2 are input to the correlation optical system 7 in the polarization mode of the TE mode.

The rotation mechanisms in the inspection device 1A according to the second modification example to the inspection device 1C according to the fourth modification example may be combined as appropriate. For example, the rotation mechanism forming the first adjustment unit 4 may include the lens 61, the half-wave plate 62, the polarizing plate 63, and the lens 64, and the rotation mechanism forming the second adjustment unit 6 may include a paddle-type polarization controller. Alternatively, the rotation mechanism forming the first adjustment unit 4 may include a fiber polarization splitter, and the rotation mechanism forming the second adjustment unit 6 may include the lens 61, the half-wave plate 62, the polarizing plate 63, and the lens 64. In any case, the first adjustment unit 4 sets the polarization direction of each of the optical pulses Pb1 and Pb2 of the pulse train Pb input to the photonic integrated circuit 5 to be perpendicular to the in-plane direction of the substrate 50. The second adjustment unit 6 matches the polarization direction of each of the optical pulses Pb1 and Pb2 of the pulse train Pb input to the correlation optical system 7 with the polarization direction of the correlation optical system 7.

### [Fifth and sixth modification examples]

In the inspection device according to the present disclosure, the pulse forming unit 3 and the photonic integrated circuit 5 do not necessarily have to be optically connected to each other by the first polarization-maintaining fiber 11. In this case, the pulse forming unit 3 and the photonic integrated circuit 5 may be spatially and optically coupled to each other. In an inspection device 1D according to the fifth modification example and an inspection device 1E according to the sixth modification example, the first adjustment unit 4 adjusts the polarization direction of each of the optical pulses Pb1 and Pb2 of the pulse train Pb without using the first polarization-maintaining fiber 11. Similarly, in the inspection device according to the present disclosure, the photonic integrated circuit 5 and the correlation optical system 7 do not necessarily have to be optically connected to each other by the second polarization-maintaining fiber 12. In this case, the photonic integrated circuit 5 and the correlation optical system 7 may be spatially and optically coupled to each other. The second adjustment unit 6 adjusts the polarization direction of each of the optical pulses Pb1 and Pb2 of the pulse train Pb without using the second polarization-maintaining fiber 12.

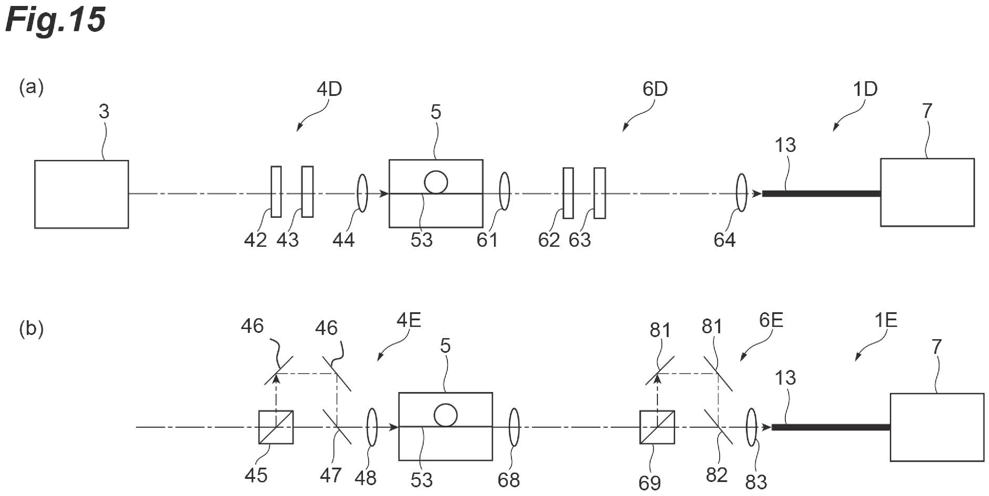

FIG. 15(a) is a drawing schematically showing an inspection device 1D according to the fifth modification example. A first adjustment unit 4D includes a half-wave plate 42, a polarizing plate 43, and a lens 44. The pulse train Pb output from the pulse forming unit 3 is input to the half-wave plate 42. The half-wave plate 42 rotates the polarization directions of the optical pulses Pb1 and Pb2 and outputs the pulse train Pb to the polarizing plate 43. The polarizing plate 43 blocks TE-mode components in the optical pulses Pb1 and Pb2, and outputs TM-mode components to the lens 44. The lens 44 condenses the pulse train Pb onto the photonic integrated circuit 5.

A second adjustment unit 6D includes a lens 61, a half-wave plate 62, a polarizing plate 63, and a lens 64. In addition, an optical fiber 13 for guiding the optical pulses Pb1 and Pb2 to the correlation optical system 7 is connected to the optical input end 7a of the correlation optical system 7. The pulse train Pb output from the photonic integrated circuit 5 is converted into a plane wave by the lens 61 and guided as a plane wave to the half-wave plate 62. The TE-mode components in the optical pulses Pb1 and Pb2 are condensed onto the optical fiber 13 by the lens 64 after passing through the half-wave plate 62 and the polarizing plate 63. The TE-mode components in the optical pulses Pb1 and Pb2 are guided to the correlation optical system 7 by the optical fiber 13.

FIG. 15(b) is a drawing schematically showing an inspection device 1E according to the fifth modification example. A first adjustment unit 4E includes a polarizing beam splitter 45, a plurality of mirrors 46, a flipper mirror 47, and a lens 48. The pulse train Pb output from the pulse forming unit 3 is input to the polarizing beam splitter 45. The polarizing beam splitter 45 reflects or transmits the optical pulses Pb1 and Pb2 according to the polarization directions of the optical pulses Pb1 and Pb2. For example, the polarizing beam splitter 45 reflects TE-mode components and transmits TM-mode components of the optical pulses Pb1 and Pb2.

The TM-mode components in the optical pulses Pb1 and Pb2 that have passed through the polarizing beam splitter 45 pass through the flipper mirror 47 and are input to the lens 48. The lens 48 condenses the TM-mode components in the optical pulses Pb1 and Pb2 onto the photonic integrated circuit 5. On the other hand, the TE-mode components in the optical pulses Pb1 and Pb2 reflected by the polarizing beam splitter 45 pass through an optical path formed by a plurality of mirrors 46, are reflected by the flipper mirror 47, and are input to the lens 48. The lens 48 condenses the TE-mode components in the optical pulses Pb1 and Pb2 onto the photonic integrated circuit 5.

In the first adjustment unit 4E, the TE-mode components in the optical pulses Pb1 and Pb2 are input to the flipper mirror 47 through the optical path formed by the plurality of mirrors 46. As a result, the TE-mode components in the optical pulses Pb1 and Pb2 are input to the photonic integrated circuit 5 later than the TM-mode components. The photonic integrated circuit 5 may propagate only the TM-mode components that are input first and block the TE-mode components that are input later, for example.

The second adjustment unit 6E includes a lens 68, a polarizing beam splitter 69, a plurality of mirrors 81, a flipper mirror 82, and a lens 83. Similar to the second adjustment unit 6D, an optical fiber 13 for guiding the pulse train Pb to the correlation optical system 7 is connected to the optical input end 7a of the correlation optical system 7. The pulse train Pb output from the photonic integrated circuit 5 is input to the polarizing beam splitter 69 through the lens 68. The polarizing beam splitter 69 reflects the TM-mode components and transmits the TE-mode components of the optical pulses Pb1 and Pb2, for example.

The TE-mode components in the optical pulses Pb1 and Pb2 that have passed through the polarizing beam splitter 45 pass through the flipper mirror 82 and are input to the lens 83. The lens 83 condenses the TE-mode components in the optical pulses Pb1 and Pb2 onto the optical fiber 13. On the other hand, the TM-mode components in the optical pulses Pb1 and Pb2 reflected by the polarizing beam splitter 69 pass through an optical path formed by a plurality of mirrors 81, are reflected by the flipper mirror 82, and are input to the lens 83. The lens 83 condenses the TE-mode components in the optical pulses Pb1 and Pb2 onto the optical fiber 13.

In the second adjustment unit 6E, the TM-mode components in the optical pulses Pb1 and Pb2 are input to the flipper mirror 82 through the optical path formed by the plurality of mirrors 81. As a result, the TM-mode components in the optical pulses Pb1 and Pb2 are input to the correlation optical system 7 later than the TE-mode components. The correlation optical system 7 may generate correlation light using only the TE-mode components that are input first and block the TM-mode components that are input later, for example.

### [Seventh modification example]

The spatial light modulator 33 included in the pulse forming unit 3 may set the wavelength width of each of the optical pulses Pb1 and Pb2 to an arbitrary magnitude. The wavelength width is, for example, a full width at half maximum (FWHM). The spatial light modulator 33 may include, in each modulation region 33b, a filter pattern that limits the wavelength passband of the optical pulses Pb1 and Pb2. Therefore, the spatial light modulator 33 may set the wavelength width of each of the optical pulses Pb1 and Pb2 to an arbitrary magnitude according to the wavelength passband of the filter pattern. The setting range of the wavelength width is, for example, 2 nm to 15 nm.

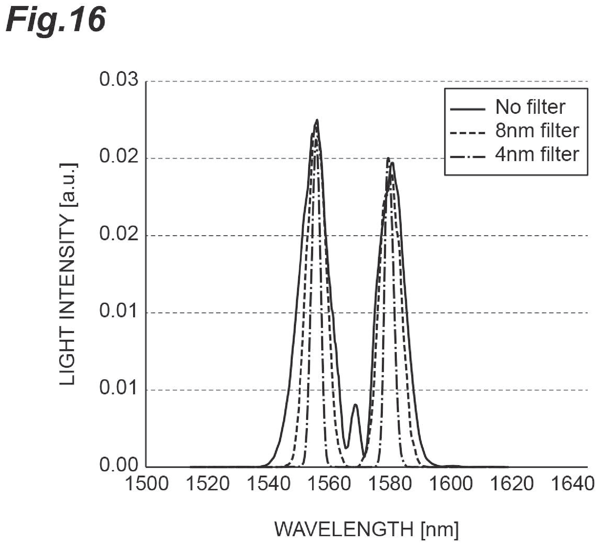

FIG. 16 is a graph showing an example in which a filter pattern is applied to each of the optical pulses Pb1 and Pb2. In the example of FIG. 16, an example is shown in which an 8 nm filter pattern or a 4 nm filter pattern is applied to each of the optical pulse Pb1 and the optical pulse Pb2. 4 nm and 8 nm indicate the wavelength widths of the wavelength passbands of the optical pulses Pb1 and Pb2. It can be seen that the wavelength widths of the optical pulses Pb1 and Pb2 to which a 4 nm filter pattern is applied are narrower than the wavelength widths of the optical pulses Pb1 and Pb2 to which an 8 nm filter pattern is applied.

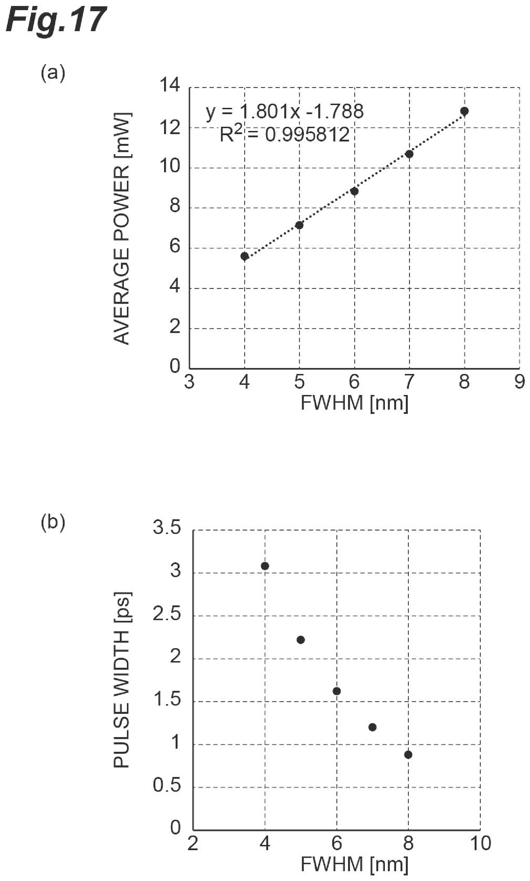

FIG. 17(a) is a graph showing changes in average output when the spatial light modulator 33 changes the wavelength width of each of the optical pulses Pb1 and Pb2. The average output can be measured, for example, by measuring the optical pulses Pb1 and Pb2 using a power meter or the like. As shown in FIG. 17(a), it can be seen that the average output increases as the wavelength width increases.

FIG. 17(b) is a graph showing changes in pulse width when the spatial light modulator 33 changes the wavelength width of each of the optical pulses Pb1 and Pb2. The pulse width herein refers to the temporal spread of the optical pulses Pb1 and Pb2. As shown in FIG. 17(b), it can be seen that the pulse width decreases as the wavelength width increases.

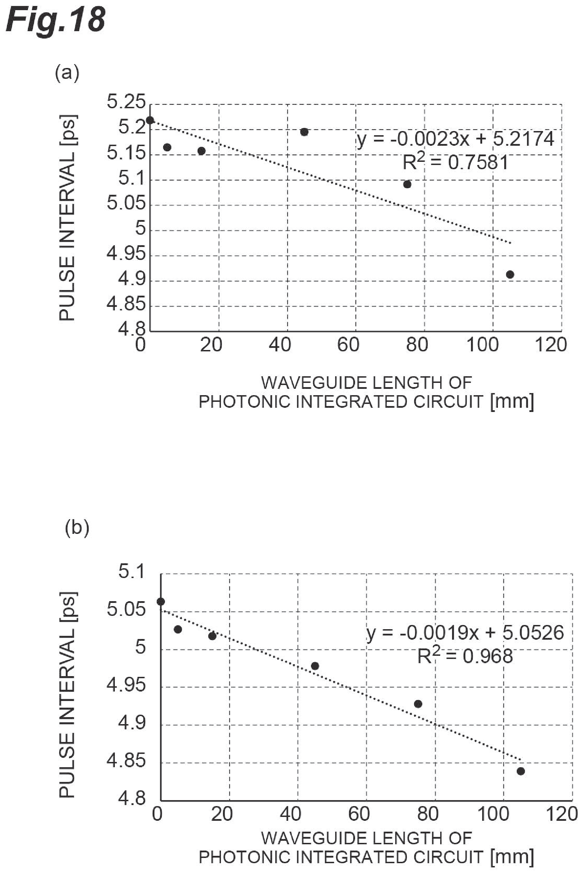

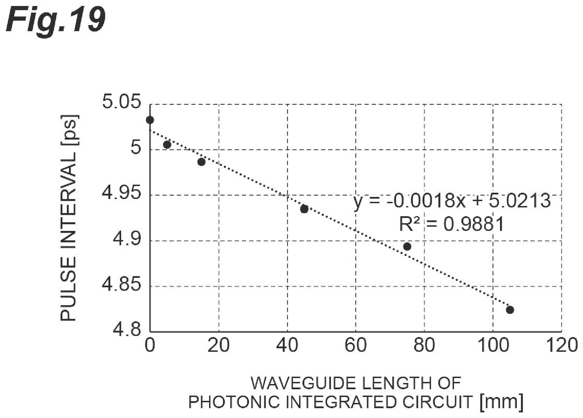

FIGS. 18 and 19 show the relationship between the waveguide length of the waveguide 53 of the photonic integrated circuit 5 and the pulse interval when the wavelength width is changed. FIG. 18(a) is a graph showing the relationship when the wavelength width is 4 nm. FIG. 18(b) is a graph showing the relationship when the wavelength width is 6 nm. FIG. 19 is a graph showing the relationship when the wavelength width is 8 nm. As shown in FIGS. 18 and 19, as the wavelength width increases, the standard deviation at each plot point decreases. In FIG. 18(a), the maximum measurement error is 4.2 fs. In FIG. 18(b), the maximum measurement error is 1.7 fs. In FIG. 19, the maximum measurement error is 1.2 fs. In addition, as shown in FIGS. 18 and 19, as the wavelength width increases, the coefficient of determination R² increases.

From the above, it can be seen that as the wavelength width increases, the pulse width decreases, and accordingly, the repetitive measurement error decreases and linearity improves. In this case, for example, by increasing the wavelength width of each of the plurality of optical pulses Pb1 and Pb2 using the pulse forming unit 3, the pulse widths of the optical pulses Pb1 and Pb2 are reduced, so that the repetitive measurement error of the amount of chromatic dispersion can be relatively reduced. As a result, it is possible to perform more accurate inspection of the photonic integrated circuit 5.

From the results of FIGS. 12 and 13, it can be seen that the measurement error is reduced when the TM-mode optical pulses Pb1 and Pb2 are input to the photonic integrated circuit 5. In addition, from the results of FIGS. 18 and 19, it can be seen that increasing the wavelength width reduces the measurement error and accordingly, improves the linearity of the measurement.

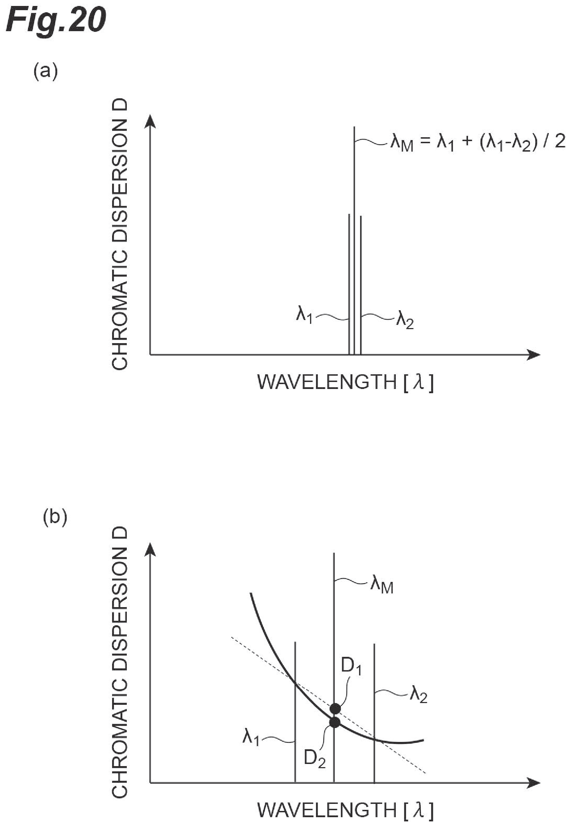

FIG. 20 is a drawing for explaining the relationship between the wavelength difference and the wavelength resolution of the measured chromatic dispersion. In this case, the unit of chromatic dispersion D is expressed as [ps/nm/km]. The chromatic dispersion D represents, in the order of ps, the time difference that occurs when two lights λ₁ and λ₂ having a wavelength difference of 1 nm propagate through a waveguide over 1 km. That is, as the wavelength difference between the light λ₁ and the light λ₂ increases, the resulting time difference increases. This makes the detection of the time difference easier and increases the detection sensitivity. However, on the other hand, increasing the wavelength difference causes a reduction in wavelength resolution. FIG. 20(a) shows the relationship between the two wavelengths (λ₁ and λ₂) used for measurement and the wavelength λ_{M} of the chromatic dispersion D that is actually measured. Since λ_{M} is defined by λ_{M} = λ₁ + (λ₁ - λ₂)/2, the closer the values of λ₁ and λ₂ are, the more the wavelength resolution of the measured chromatic dispersion D improves. However, as shown in FIG. 20(b), when the wavelength difference between λ₁ and λ₂ is large, the measured value of the chromatic dispersion D becomes D1, which may increase the deviation from the true value D2. Therefore, in actual inspection of a photonic integrated circuit, it is preferable to set the wavelength difference in consideration of the trade-off between detection sensitivity and wavelength resolution.

The inspection device and the inspection method are not limited to the above embodiments and configuration examples, and various modifications are possible. For example, in the above embodiments, the amount of chromatic dispersion of the photonic integrated circuit 5 is calculated using the correlation optical system 7; however, the amount of chromatic dispersion of the photonic integrated circuit 5 may be calculated using a pulse shift method, a phase modulation method, or spectral interferometry instead of the correlation optical system 7.

The pulse shift method is a method of directly measuring the group delay time for each wavelength of the two optical pulses Pb1 and Pb2 in the time domain. In the pulse shift method, for example, the optical pulses Pb1 and Pb2 having pulse widths on the order of ns are propagated through an optical fiber, and the group delay time of each optical pulse is measured. For this reason, the measurement is easy. However, in order to obtain a measurable delay time, it is necessary to propagate the optical pulses Pb1 and Pb2 through an optical fiber having a sufficiently large fiber length (for example, several kilometers).

The spectral interferometry is a method in which the two optical pulses Pb1 and Pb2 are used as sample pulse light, interference between the sample pulse light and reference pulse is observed in the spectral domain, and the amount of chromatic dispersion is estimated from changes in the spectral shape. For the optical system, for example, a Mach-Zehnder optical system is used. Since the spectral interferometry can accurately measure relatively small changes in dispersion, the spectral interferometry can be applied to dispersion measurement using a relatively short optical fiber. However, compared to the pulse shift method, a precise operation is required to align the timing (delay) between the interference pulses, and accordingly, highly sophisticated adjustment is required each time a sample to be observed changes.

When the inspection device does not include the correlation optical system 7, the pulse train Pb is input to the photonic integrated circuit 5 by the first adjustment unit 4 such that the polarization direction of each of the plurality of optical pulses Pb1 and Pb2 is perpendicular to the in-plane direction of the substrate 50. Therefore, polarization mixing in the pulse train Pb output from the photonic integrated circuit 5 is less likely to occur. As a result, the detection accuracy of the time waveform is improved, and measurement errors of the chromatic dispersion are reduced. This suppresses polarization mixing of the pulse train Pb output from the photonic integrated circuit 5, enabling accurate inspection of the photonic integrated circuit 5.

The evaluation unit 9 may determine whether the photonic integrated circuit 5 is acceptable or defective, instead of evaluating the waveguide 53 of the photonic integrated circuit 5. For example, in the inspection flow shown in FIG. 12, in the evaluation step S7, when the estimated amount of chromatic dispersion exceeds a threshold value, the evaluation unit 9 may determine that the amount of chromatic dispersion of the pulse train Pb in the photonic integrated circuit 5 is abnormal, and when the estimated amount of chromatic dispersion is below the threshold value, the evaluation unit 9 may determine that the amount of chromatic dispersion of the pulse train Pb in the photonic integrated circuit 5 is normal. In this case, heating of a part of the waveguide 53 by the microheater 58 may not be performed.

### Reference Signs List

1, 1A, 1B, 1C, 1D, 1E: inspection device, 3: pulse forming unit, 7, 7A, 7B: correlation optical system, 4, 4A, 4B, 4C, 4D, 4E: first adjustment unit, 6, 6A, 6B, 6C, 6D, 6E: second adjustment unit, 5: photonic integrated circuit, 8: optical detection unit, 9: evaluation unit, 11: first polarization-maintaining fiber, 12: second polarization-maintaining fiber, 33: spatial light modulator, 50: substrate, 53: waveguide, Pb, Pba, Pbb: pulse train, Pb1, Pb2, Pc1, Pc2: optical pulse, Pc: correlation light, S1: pulse forming step, S2: first adjustment step, S4: second adjustment step, S5: correlation light generation step, S7: evaluation step.

## Claims

1. An inspection device for inspecting a photonic integrated circuit in which a waveguide is provided on a substrate, the device comprising:
a pulse forming unit that generates a pulse train in which a plurality of optical pulses having different center wavelengths are arranged at predetermined time intervals;
a correlation optical system that has polarization dependence in a predetermined polarization direction and generates correlation light including cross-correlation light or auto-correlation light of the pulse train output from the photonic integrated circuit through the waveguide;
an optical detection unit that detects a time waveform of the correlation light;
an evaluation unit that evaluates the waveguide of the photonic integrated circuit based on a feature quantity of the time waveform; and
a first adjustment unit that makes a polarization direction of each optical pulse of the pulse train input to the photonic integrated circuit perpendicular to an in-plane direction of the substrate.

2. The inspection device according to claim 1, further comprising:
a first polarization-maintaining fiber that optically connects the pulse forming unit to the photonic integrated circuit,
wherein the first adjustment unit is a rotation mechanism that rotates the first polarization-maintaining fiber around an axis of the first polarization-maintaining fiber.

3. The inspection device according to claim 1, further comprising:
a first polarization-maintaining fiber that optically connects the pulse forming unit to the photonic integrated circuit,
wherein the first adjustment unit is a rotation mechanism that rotates the in-plane direction of the substrate around an axis of the first polarization-maintaining fiber.

4. The inspection device according to any one of claims 1 to 3, further comprising:
a second adjustment unit that matches a polarization direction of each optical pulse of the pulse train input to the correlation optical system with the polarization direction of the correlation optical system.

5. The inspection device according to claim 4, further comprising:
a second polarization-maintaining fiber that optically connects the photonic integrated circuit to the correlation optical system,
wherein the second adjustment unit is a rotation mechanism that rotates the second polarization-maintaining fiber around an axis of the second polarization-maintaining fiber.

6. The inspection device according to any one of claims 1 to 5,
wherein the pulse forming unit includes a spatial light modulator that sets at least one of a wavelength difference, a time difference, and a wavelength width of the plurality of optical pulses to an arbitrary magnitude.

7. An inspection device for inspecting a photonic integrated circuit in which a waveguide is provided on a substrate, the device comprising:
a pulse forming unit that generates a pulse train in which a plurality of optical pulses having different center wavelengths are arranged at predetermined time intervals;
an optical detection unit that detects a time waveform of the pulse train generated by the pulse forming unit and output from the photonic integrated circuit through the waveguide;
an evaluation unit that evaluates the waveguide of the photonic integrated circuit based on a feature quantity of the time waveform; and
a first adjustment unit that makes a polarization direction of each optical pulse of the pulse train input to the photonic integrated circuit perpendicular to an in-plane direction of the substrate.

8. An inspection method for inspecting a photonic integrated circuit in which a waveguide is provided on a substrate, the method comprising:
a pulse forming step for generating a pulse train in which a plurality of optical pulses having different center wavelengths are arranged at predetermined time intervals;
a correlation light generation step for generating correlation light including cross-correlation light or auto-correlation light of the pulse train output from the photonic integrated circuit by using a correlation optical system having polarization dependence in a predetermined polarization direction;
an optical detection step for detecting a time waveform of the correlation light;
an evaluation step for evaluating the waveguide of the photonic integrated circuit based on a feature quantity of the time waveform; and
a first adjustment step of making a polarization direction of each optical pulse of the pulse train input to the photonic integrated circuit perpendicular to an in-plane direction of the substrate.

9. The inspection method according to claim 8, further comprising:
a second adjustment step for matching a polarization direction of each optical pulse of the pulse train input to the correlation optical system with the polarization direction of the correlation optical system.

10. The inspection method according to claim 8 or 9,
wherein, in the evaluation step, an amount of chromatic dispersion of the photonic integrated circuit is calculated based on a feature quantity of the time waveform of the correlation light detected through the photonic integrated circuit and a feature quantity of the time waveform of the correlation light detected without passing through the photonic integrated circuit.

11. The inspection method according to claim 8 or 9,
wherein, in the evaluation step, an amount of chromatic dispersion of the photonic integrated circuit is calculated based on a feature quantity of a time waveform of correlation light theoretically calculated in advance assuming that chromatic dispersion is zero and a feature quantity of the time waveform of the correlation light detected in the optical detection step.
